(19) Europäisches Patentamt
European Patent Office
Office européen des brevets

(11) **EP 4 339 363 A1**

(12) **EUROPEAN PATENT APPLICATION**

(43) Date of publication:
**20.03.2024  Bulletin 2024/12**

(21) Application number: **22306346.2**

(22) Date of filing: **14.09.2022**

(51) International Patent Classification (IPC):
***D21H 17/68*** *(2006.01)*      ***D21H 19/40*** *(2006.01)*

(52) Cooperative Patent Classification (CPC):
**D21H 19/40; D21H 17/68;** C01B 33/22

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **ImerTech SAS**
**75015 Paris (FR)**

(72) Inventor: **RABOT, Yannick**
**31120 Lacroix Falgarde (FR)**

(74) Representative: **Haseltine Lake Kempner LLP**
**One Portwall Square**
**Portwall Lane**
**Bristol BS1 6BH (GB)**

(54) **TALC PARTICULATES**

(57)      A talc particulate has a BET specific surface area of from about 2.0 m$^2$/g to about 10.0 m$^2$/g, a d$_{50laser}$ of from about 10.0 $\mu$m to 15.0 $\mu$m, a d$_{50sedi}$ of no greater than about 7.5 $\mu$m, and a lamellarity index of from about 1.6 to about 5.0, wherein a ratio of the lamellarity index to the BET specific surface area is at least about 0.4.

EP 4 339 363 A1

**Description**

**TECHNICAL FIELD**

The present disclosure concerns talc particulates, slurry compositions comprising talc particulates, formulations for barrier coatings containing talc particulates, paper products coated with such barrier coatings, methods of making talc particulates and uses of talc particulates.

**BACKGROUND**

Talc particulates have been developed for a number of industrial applications. For example, talc particulates can be used as fillers for polymer compositions. In addition, talc particulates can be used in coating compositions, for example, for paper products.

Paper products are commonly coated with compositions to impart desirable properties on the paper products. These compositions generally comprise one or more binders and often also comprise one or more inorganic particulate materials such as a talc particulate. The one or more binders and one or more inorganic particulate materials may be selected to provide a surface which is suitable for the intended use of the paper product. For example, the binder(s) and/or inorganic particulate material(s) may be selected to provide a suitable surface for a particular type of printing (e.g. offset, flexographic or inkjet printing), for example such that a printed paper product will have a desired print density. The binder(s) and/or inorganic particulate material(s) may also be selected to provide paper products which have desired levels of gloss, smoothness, brightness and porosity. Coated paper products may be used for numerous applications, for example to package goods such as food and beverage products, electronic products, automotive products, medical/pharmaceutical products and cosmetic products.

The intended use of the coated paper products may influence the type of binder(s) and/or inorganic particulate material(s) that are selected for use in paper coating compositions. For example, the binder(s) and/or inorganic particulate material(s) may be selected to provide paper products which have desired levels of water, moisture vapour, oxygen or other gas, oil or grease resistance. That is to say, coatings for paper products may function as barrier coatings. Improved barrier coating compositions would be desirable.

Coating compositions for paper products are commonly prepared by combining an inorganic mineral slurry, comprising the inorganic particulate material(s), with the binder(s). Such inorganic mineral slurries are often prepared by combining a dry inorganic mineral product, such as a talc particulate, with water. However, it can be difficult to achieve high solids contents when inorganic mineral slurries are prepared in this way. Improved methods of preparing inorganic mineral slurries, and inorganic mineral slurries having higher solids contents, would therefore also be desirable.

Commercially available coating compositions prepared using inorganic mineral slurries can also have high carbon footprints. Reductions in the carbon footprints of inorganic mineral slurries would therefore also be desirable.

**SUMMARY**

According to a first aspect, there is provided a talc particulate, wherein the talc particulate has: a BET specific surface area of from about 2.0 $m^2/g$ to about 10.0 $m^2/g$, a $d_{50laser}$ of from about 10.0 $\mu$m to 15.0 $\mu$m, a $d_{50sedi}$ of no greater than about 7.5 $\mu$m, and a lamellarity index of from about 1.6 to about 5.0, wherein a ratio of the lamellarity index to the BET specific surface area is at least about 0.4 $g/m^2$.

The talc particulate may have a BET specific surface area of from about 3.0 $m^2/g$ to about 8.0 $m^2/g$, for example, from about 5.0 $m^2/g$ to about 8.0 $m^2/g$, or from about 7.0 $m^2/g$ to about 8.0 $m^2/g$.

The talc particulate may have a $d_{50laser}$ of from about 11.0 $\mu$m to about 15.0 $\mu$m, for example, from about 11.0 $\mu$m to about 13.5 $\mu$m, or from about 11.0 $\mu$m to about 12.5 $\mu$m, or from about 11.0 $\mu$m to about 12.0 $\mu$m.

The talc particulate may have a $d_{50sedi}$ of from about 2.0 $\mu$m to about 7.5 $\mu$m, for example, from about 2.0 $\mu$m to about 5.5 $\mu$m, or from about 2.0 $\mu$m to about 4.0 $\mu$m, or from about 2.0 $\mu$m to about 3.0 $\mu$m, or from about 2.0 $\mu$m to about 2.5 $\mu$m.

The talc particulate may have a lamellarity index of from about 2.0 to about 4.0, for example, from about 3.0 to about 4.0, or from about 3.5 to about 4.0.

It may be that from about 10 % by weight to about 50 % by weight, for example, from about 20 % by weight to about 50 % by weight, or from about 30 % by weight to about 48 % by weight, or from about 40 % by weight to about 48 % by weight, of the particles of the talc particulate has a particle size, by sedigraph, equal to or smaller than about 2.0 $\mu$m.

The talc particulate may have a shape factor of at least about 40, for example, from about 45 to about 100, or from about 65 to about 100, or from about 80 to about 100, or from about 90 to about 100.

According to a second aspect, there is provided a slurry composition comprising at least about 50 % by weight, for example, at least about 55 % by weight, or at least about 60 % by weight, optionally no greater than about 70 % by weight, of a talc particulate according to the first aspect.

According to a third aspect, there is provided a formulation for a barrier coating, the formulation comprising from about 20 % by weight to about 65 % by weight of a talc particulate according to the first aspect and from about 80 % by weight to about 35 % by weight of binder, based on the total solids content of the formulation.

According to a fourth aspect, there is provided a paper product coated with a barrier coating according to the third aspect, for example, wherein the coat weight of the barrier coating is at least about 5 gsm.

According to a fifth aspect, there is provided a method for making a talc particulate, the method comprising: wet-grinding an aqueous suspension of a talc feed material in the presence of a dispersant; wherein the initial solids content of the aqueous suspension is at least about 50 % by weight, based on the total weight of the aqueous suspension, and wherein the wet-grinding is carried out under conditions suitable to obtain an aqueous slurry comprising a talc particulate according to the first aspect.

The aqueous slurry may have a solids content of at least about 50 wt. %, based on the total weight of the aqueous slurry.

The aqueous suspension and therefore the resultant aqueous slurry may comprise one or more pH modifiers, for example, one or more alkali salts such as sodium hydroxide.

According to a sixth aspect, there is provided a use of a talc particulate according to the first aspect in a barrier coating.

According to a seventh aspect, there is provided a use of a talc particulate according to the first aspect in a barrier coating: to improve (e.g. reduce) the water absorptivity of a paper product coated with the barrier coating, for example, as determined in accordance with the Cobb 1800 test (according to ISO 535:2014); to improve the moisture resistance of a paper product coated with the barrier coating, for example, as determined in accordance with the jMVTR test (according to ISO 2528:2017); and/or to improve (e.g. increase) the oil and grease resistance of a paper product coated with the barrier coating, for example, as determined in accordance with Kit test/Olive oil test.

The skilled person will appreciate that, except where mutually exclusive, a feature described in relation to any one of the above aspects may be applied *mutatis mutandis* to any other aspect. Furthermore, except where mutually exclusive, any feature described herein may be applied to any aspect and/or combined with any other feature described herein.

## FIGURES

Embodiments will now be described by way of example only, with reference to the Figures, in which:

**Figure 1** is a plot of water absorptivity (in $g/m^2$) as measured according to the Cobb 1800 Test for sheets of paper coated with 19 gsm of Comparative and Inventive Coating Compositions prepared using EAA latex;

**Figure 2** is a plot of water absorptivity (in $g/m^2$) as measured according to the Cobb 1800 Test for sheets of paper coated with 13 gsm and 19 gsm of Comparative and Inventive Coating Compositions prepared using SBR latex;

**Figure 3** is a plot of moisture vapour transfer rate (in $g/m^2/d$) as measured according to the jMVTR Test for sheets of paper coated with 13 gsm or 19 gsm of Comparative and Inventive Coating Compositions prepared using EAA latex;

**Figure 4** is a plot of Kit Test result for sheets of paper coated with 13 gsm and 19 gsm of Comparative and Inventive Coating Compositions prepared used EAA latex; and

**Figure 5** is a plot of olive oil resistance (in minutes) measured using the Olive Oil Test for sheets of paper coated with 19 gsm of Comparative and Inventive Coating Compositions prepared using EAA latex.

## DETAILED DESCRIPTION OF THE INVENTION

It has surprisingly been found that controlling the lamellarity index and the BET specific surface area of a talc particulate can lead to improvements in moisture resistance when the talc particulate is used in a barrier coating for paper products.

*Talc particulate*

As used herein, the term "talc" means either the magnesium silicate mineral, or the mineral chlorite (magnesium aluminium silicate), or a mixture of the two, optionally associated with other minerals, for example, dolomite and/or magnesite, or furthermore, synthetic talc, also known as talcose.

In certain embodiments, the talc is the magnesium silicate mineral or the mineral chlorite, or a mixture thereof. Optionally, the talc may further include dolomite, calcite or magnesite, or combinations thereof. The total amount of other minerals such as dolomite, calcite and/or magnesite in the talc may be less than about 25 % by weight, based on the total weight of talc, for example, less than about 20 % by weight, or less than about 15 % by weight, or less than about 10 % by weight, or less than about 5 % by weight, or less than about 1 % by weight, or less than about 0.75 % by weight, or 0.5 % by weight or less, based on the total weight of talc. In certain embodiments, the talc comprises, consists essentially of, or consists of magnesium silicate mineral. In certain embodiments, the talc is a mixture of magnesium silicate mineral and/or chlorite. The chlorite may, for example, comprise, consist essentially of, or consist of clinochlore $((Mg,Fe^{2+})_5Al(Si_3Al)O_{10}(OH)_8)$. For example, the chlorite may comprise primarily clinochlore. The weight ratio of magnesium silicate mineral to chlorite may be from about 5:1 to about 1:4, for example, from about 4:1 to about 1:1, or from about 4:1 to about 2:1, or from about 4:1 to about 2.5:1, or from about 4:1 to about 3:1, or about 2:1, or about 3:1, or about 4:1. In certain embodiments, the talc comprises, consists essentially of, or consists of synthetic talc or talcose.

In certain embodiments, the talc is a hydroxylated magnesium silicate, which belongs to the family of layered phyllosilicates. Its elemental structure consists of $MgO_4(OH)$ octahedral layers (named "O") sandwiched between 6 ring silica tetrahedron $SiO_2$ (named "T"). This forms a repeating base unit made of TOT layers. These TOT layers will then pile up along c* axis to form a crystallite with a coherent crystalline structure whose size can be measured.

As used herein, the term "BET specific surface area" refers to the area of the surface of the particles of the talc particulate with respect to unit mass, determined according to the BET method by the quantity of nitrogen adsorbed on the surface of said particles so as to form a monomolecular layer completely covering said surface (measurement according to the BET method, AFNOR standard X11-621 and 622 or ISO 9277). Details of the BET specific surface area measurement method used in the preparation of the present application are set out in the Examples.

Particle size properties may be measured in a well-known manner by sedimentation of the particulate material in a fully dispersed condition in an aqueous medium using a Sedigraph 5100 machine as supplied by Micromeritics Instruments Corporation, Norcross, Georgia, USA (website: www.micromeritics.com), referred to herein as a "Micromeritics Sedigraph 5100 unit". Such a machine provides measurements and a plot of the cumulative percentage by weight of particles having a size, referred to in the art as the 'equivalent spherical diameter' (e.s.d), less than given e.s.d values. The mean particle size $d_{50}$ is the value determined in this way of the particle e.s.d at which there are 50% by weight of the particles which have an equivalent spherical diameter less than that $d_{50}$ value. The $d_{95}$ value is the value at which 95% by weight of the particles have an esd less than that $d_{95}$ value. The $d_{98}$, $d_{90}$, $d_{75}$, $d_{25}$ and the $d_{10}$ are the values determined in this way of the particle e.s.d. at which there are 98%, 90%, 75%, 25% and 10% respectively by weight of the particles which have an equivalent spherical diameter less than that $d_{98}$, $d_{90}$, $d_{75}$, $d_{25}$ or $d_{10}$ value. Throughout this specification, particle size parameters measured by sedigraph are indicated using the subscript "sedi". For example, $d_{50}$, measured by sedigraph, is indicated as $d_{50sedi}$.

Particle size properties may also be measured by wet Malvern laser scattering (standard ISO 13320-1). In this technique, the size of particles in powders, suspensions and emulsions may be measured using the diffraction of a laser beam, based on an application of Mie theory. Such a machine, for example a Malvern Mastersizer S or a Malvern Mastersizer 2000 (as supplied by Malvern Instruments), provides measurements and a plot of the cumulative percentage by volume of particles having a size, referred to in the art as the 'equivalent spherical diameter' (e.s.d), less than given e.s.d values. The mean particle size $d_{50}$ is the value determined in this way of the particle e.s.d at which there are 50% by volume of the particles which have an equivalent spherical diameter less than that $d_{50}$ value. The $d_{98}$, $d_{90}$, $d_{75}$, $d_{25}$ and the $d_{10}$ are the values determined in this way of the particle e.s.d. at which there are 98%, 90%, 75%, 25% and 10% respectively by volume of the particles which have an equivalent spherical diameter less than that $d_{98}$, $d_{90}$, $d_{75}$, $d_{25}$ or $d_{10}$ value. For the avoidance of doubt, the measurement of particle size using laser light scattering is not an equivalent method to the sedimentation method referred to above. Throughout this specification, particle size parameters measured by laser scattering are indicated using the subscript "laser". For example, $d_{50}$, measured by laser scattering, is indicated as $d_{50laser}$.

Details of the sedigraphic and laser particle size measurement methods used in the preparation of the present application are set out in the Examples.

Particle size properties may also be measured by sieve analysis, as is well known in the art, for example using an electromagnetic vibratory sieve shaker. A suitable electromagnetic vibratory sieve shaker is the D0407.2 available from Controlab, France.

Lamellarity index (LI) is a measure of overall particle shape. As used herein, lamellarity index is defined by the following ratio:

$$LI = \frac{d_{50laser} - d_{50sedi}}{d_{50sedi}}$$

in which "$d_{50laser}$" is the value of the mean particle size (i.e. $d_{50}$) obtained by a particle size measurement by wet Malvern laser scattering (standard AFNOR NFX11-666 or ISO 13329-1) and "$d_{50sedi}$" is the value of the median diameter obtained by sedimentation using a sedigraph (standard AFNOR X11-683 or ISO 13317-3), as described above and in the Examples. Reference may be made to the article by G. Baudet and J. P. Rona, Ind. Min. Mines et Carr. Les techn. June, July 1990, pp 55-61, which shows that the lamellarity index is correlated to the mean ratio of the largest dimension of the particle to its smallest dimension.

"Shape factor", as used herein, refers to the PANACEA shape factor, which is a property measured by the PANACEA (Particle Assessment by Natural Alignment and Conductivity Effect Analysis) method. This is equipment that enables the shape factor of a mineral to be measured. The equipment described in U.S. Patent 5,576,617 and WO2013/015841, the contents of which are incorporated herein by reference in their entirety, can be used. During the measurement, a talc particulate suspension is circulated by a pump through a cell where the conductivity is measured from one extremity to the other. When the pump is turned on, the non-spherical particles will naturally align along the axis of the pipe. In this position, the particles will present a minimal resistance to the flow of the electrical charges. The conductivity measurement is then maximal. When the pump is off, the particles will randomly orient according to Brownian movement. In this position, the electrical charges have to go through a longer path to progress in the suspension. The conductivity value then decreases. The number that is given by the tests results from the ratio between these 2 measurements (highest value over lowest value). Hence, a more lamellar product will lead to a higher ratio (higher shape factor) between these 2 measurements compared to a product showing a low lamellarity (lower shape factor).

For the shape factor measurement itself, a suspension volume corresponding to 50 g of dry product is taken. In order to avoid sedimentation when the pump is off, 10 mL of a dispersant, e.g. sodium polyacrylate, and 80 mL deionised water is added before homogenising the suspension. Then, the suspension is passed through a 53 $\mu$m BSS sieve in order to eliminate the coarse particles that may hinder the measurement. Deionized water (around 200 mL) is added in order to obtain a density between 1.08 and 1.12 (i.e. a weight concentration between 12 and 17 wt.%, for example approximately 15 wt.%). The pH of the suspension is then measured to check it is within 8.5 and 10 and if it is not the case, sodium hydroxide is added. The suspension is then left to stand for at least 20 minutes. The PANACEA method is then performed after vigorously shaking to re-suspend the sample. The method is performed at room temperature, for example, at about 23 °C. The shape factor is obtained from an average of at least 3 measurements.

The talc particulate may have a BET specific surface area no less than about 2.0 $m^2$/g, for example, no less than about 2.5 $m^2$/g, or no less than about 3.0 $m^2$/g, or no less than about 3.5 $m^2$/g, or no less than about 4.0 $m^2$/g, or no less than about 4.5 $m^2$/g, or no less than about 5.0 $m^2$/g, or no less than about 5.5 $m^2$/g, or no less than about 6.0 $m^2$/g, or no less than about 6.5 $m^2$/g, or no less than about 7.0 $m^2$/g, or no less than about 7.5 $m^2$/g, or no less than about 8.0 $m^2$/g, or no less than about 8.5 $m^2$/g, or no less than about 9.0 $m^2$/g, or no less than about 9.5 $m^2$/g. The talc particulate may have a BET specific surface area no greater than about 10.0 $m^2$/g, for example, no greater than about 9.5 $m^2$/g, or no greater than about 9.0 $m^2$/g, or no greater than about 8.5 $m^2$/g, or no greater than about 8.0 $m^2$/g, or no greater than about 7.5 $m^2$/g, or no greater than about 7.0 $m^2$/g, or no greater than about 6.5 $m^2$/g, or no greater than about 6.0 $m^2$/g, or no greater than about 5.5 $m^2$/g, or no greater than about 5.0 $m^2$/g, or no greater than about 4.5 $m^2$/g, or no greater than about 4.0 $m^2$/g, or no greater than about 3.5 $m^2$/g, or no greater than about 3.0 $m^2$/g. The talc particulate may have a BET specific surface area from about 2.0 $m^2$/g to about 10.0 $m^2$/g, for example, from about 2.0 $m^2$/g to about 9.5 $m^2$/g, or from about 2.0 $m^2$/g to about 9.0 $m^2$/g, or from about 2.0 $m^2$/g to about 8.5 $m^2$/g, or from about 2.0 $m^2$/g to about 8.0 $m^2$/g, or from about 2.0 $m^2$/g to about 7.5 $m^2$/g, or from about 2.0 $m^2$/g to about 7.0 $m^2$/g, or from about 2.0 $m^2$/g to about 6.5 $m^2$/g, or from about 2.0 $m^2$/g to about 6.0 $m^2$/g, or from about 2.0 $m^2$/g to about 5.5 $m^2$/g, or from about 2.0 $m^2$/g to about 5.0 $m^2$/g, or from about 2.0 $m^2$/g to about 4.5 $m^2$/g, or from about 2.0 $m^2$/g to about 4.0 $m^2$/g, or from about 2.0 $m^2$/g to about 3.5 $m^2$/g, or from about 2.0 $m^2$/g to about 3.0 $m^2$/g, or from about 2.5 $m^2$/g to about 10.0 $m^2$/g, or from about 2.5 $m^2$/g to about 9.5 $m^2$/g, or from about 2.5 $m^2$/g to about 9.0 $m^2$/g, or from about 2.5 $m^2$/g to about 8.5 $m^2$/g, or from about 2.5 $m^2$/g to about 8.0 $m^2$/g, or from about 2.5 $m^2$/g to about 7.5 $m^2$/g, or from about 2.5 $m^2$/g to about 7.0 $m^2$/g, or from about 2.5 $m^2$/g to about 6.5 $m^2$/g, or from about 2.5 $m^2$/g to about 6.0 $m^2$/g, or from about 2.5 $m^2$/g to about 5.5 $m^2$/g, or from about 2.5 $m^2$/g to about 5.0 $m^2$/g, or from about 2.5 $m^2$/g to about 4.5 $m^2$/g, or from about 2.5 $m^2$/g to about 4.0 $m^2$/g, or from about 2.5 $m^2$/g to about 3.5 $m^2$/g, or from about 2.5 $m^2$/g to about 3.0 $m^2$/g, or from about 3.0 $m^2$/g to about 10.0 $m^2$/g, or from about 3.0 $m^2$/g to about 9.5 $m^2$/g, or from about 3.0 $m^2$/g to about 9.0 $m^2$/g, or from about 3.0 $m^2$/g to about 8.5 $m^2$/g, or from about 3.0 $m^2$/g to about 8.0 $m^2$/g, or from about 3.0 $m^2$/g to about 7.5 $m^2$/g, or from about 3.0 $m^2$/g to about 7.0 $m^2$/g, or from about 3.0 $m^2$/g to about 6.5 $m^2$/g, or from about 3.0 $m^2$/g to about 6.0 $m^2$/g, or from about 3.0 $m^2$/g to about 5.5 $m^2$/g, or from about 3.0 $m^2$/g to about 5.0 $m^2$/g, or from about 3.0 $m^2$/g to about 4.5 $m^2$/g, or from about 3.0 $m^2$/g to about 4.0 $m^2$/g, or from about 3.0 $m^2$/g to about 3.5 $m^2$/g, or from about 3.5 $m^2$/g to about 10.0 $m^2$/g, or from about 3.5 $m^2$/g to about 9.5 $m^2$/g, or from about 3.5 $m^2$/g to about 9.0 $m^2$/g, or from about 3.5 $m^2$/g to about 8.5 $m^2$/g, or from about 3.5 $m^2$/g to about 8.0 $m^2$/g, or from about 3.5 $m^2$/g to about 7.5 $m^2$/g, or from about 3.5 $m^2$/g to about 7.0 $m^2$/g, or from about 3.5 $m^2$/g to about 6.5 $m^2$/g, or from about 3.5 $m^2$/g to about 6.0 $m^2$/g, or from about 3.5 $m^2$/g to about 5.5 $m^2$/g, or from about 3.5 $m^2$/g to about 5.0 $m^2$/g, or from about 3.5 $m^2$/g to about 4.5 $m^2$/g, or from about 3.5 $m^2$/g to about 4.0 $m^2$/g, or from about 4.0 $m^2$/g to

about 10.0 m$^2$/g, or from about 4.0 m$^2$/g to about 9.5 m$^2$/g, or from about 4.0 m$^2$/g to about 9.0 m$^2$/g, or from about 4.0 m$^2$/g to about 8.5 m$^2$/g, or from about 4.0 m$^2$/g to about 8.0 m$^2$/g, or from about 4.0 m$^2$/g to about 7.5 m$^2$/g, or from about 4.0 m$^2$/g to about 7.0 m$^2$/g, or from about 4.0 m$^2$/g to about 6.5 m$^2$/g, or from about 4.0 m$^2$/g to about 6.0 m$^2$/g, or from about 4.0 m$^2$/g to about 5.5 m$^2$/g, or from about 4.0 m$^2$/g to about 5.0 m$^2$/g, or from about 4.0 m$^2$/g to about 4.5 m$^2$/g, or from about 4.5 m$^2$/g to about 10.0 m$^2$/g, or from about 4.5 m$^2$/g to about 9.5 m$^2$/g, or from about 4.5 m$^2$/g to about 9.0 m$^2$/g, or from about 4.5 m$^2$/g to about 8.5 m$^2$/g, or from about 4.5 m$^2$/g to about 8.0 m$^2$/g, or from about 4.5 m$^2$/g to about 7.5 m$^2$/g, or from about 4.5 m$^2$/g to about 7.0 m$^2$/g, or from about 4.5 m$^2$/g to about 6.5 m$^2$/g, or from about 4.5 m$^2$/g to about 6.0 m$^2$/g, or from about 4.5 m$^2$/g to about 5.5 m$^2$/g, or from about 4.5 m$^2$/g to about 5.0 m$^2$/g, or from about 5.0 m$^2$/g to about 10.0 m$^2$/g, or from about 5.0 m$^2$/g to about 9.5 m$^2$/g, or from about 5.0 m$^2$/g to about 9.0 m$^2$/g, or from about 5.0 m$^2$/g to about 8.5 m$^2$/g, or from about 5.0 m$^2$/g to about 8.0 m$^2$/g, or from about 5.0 m$^2$/g to about 7.5 m$^2$/g, or from about 5.0 m$^2$/g to about 7.0 m$^2$/g, or from about 5.0 m$^2$/g to about 6.5 m$^2$/g, or from about 5.0 m$^2$/g to about 6.0 m$^2$/g, or from about 5.0 m$^2$/g to about 5.5 m$^2$/g, or from about 5.5 m$^2$/g to about 10.0 m$^2$/g, or from about 5.5 m$^2$/g to about 9.5 m$^2$/g, or from about 5.5 m$^2$/g to about 9.0 m$^2$/g, or from about 5.5 m$^2$/g to about 8.5 m$^2$/g, or from about 5.5 m$^2$/g to about 8.0 m$^2$/g, or from about 5.5 m$^2$/g to about 7.5 m$^2$/g, or from about 5.5 m$^2$/g to about 7.0 m$^2$/g, or from about 5.5 m$^2$/g to about 6.5 m$^2$/g, or from about 5.5 m$^2$/g to about 6.0 m$^2$/g, or from about 5.5 m$^2$/g to about 5.5 m$^2$/g, or from about 6.0 m$^2$/g to about 10.0 m$^2$/g, or from about 6.0 m$^2$/g to about 9.5 m$^2$/g, or from about 6.0 m$^2$/g to about 9.0 m$^2$/g, or from about 6.0 m$^2$/g to about 8.5 m$^2$/g, or from about 6.0 m$^2$/g to about 8.0 m$^2$/g, or from about 6.0 m$^2$/g to about 7.5 m$^2$/g, or from about 6.0 m$^2$/g to about 7.0 m$^2$/g, or from about 6.0 m$^2$/g to about 6.5 m$^2$/g, or from about 6.5 m$^2$/g to about 10.0 m$^2$/g, or from about 6.5 m$^2$/g to about 9.5 m$^2$/g, or from about 6.5 m$^2$/g to about 9.0 m$^2$/g, or from about 6.5 m$^2$/g to about 8.5 m$^2$/g, or from about 6.5 m$^2$/g to about 8.0 m$^2$/g, or from about 6.5 m$^2$/g to about 7.5 m$^2$/g, or from about 6.5 m$^2$/g to about 7.0 m$^2$/g, or from about 7.0 m$^2$/g to about 10.0 m$^2$/g, or from about 7.0 m$^2$/g to about 9.5 m$^2$/g, or from about 7.0 m$^2$/g to about 9.0 m$^2$/g, or from about 7.0 m$^2$/g to about 8.5 m$^2$/g, or from about 7.0 m$^2$/g to about 8.0 m$^2$/g, or from about 7.0 m$^2$/g to about 7.5 m$^2$/g, or from about 7.5 m$^2$/g to about 10.0 m$^2$/g, or from about 7.5 m$^2$/g to about 9.5 m$^2$/g, or from about 7.5 m$^2$/g to about 9.0 m$^2$/g, or from about 7.5 m$^2$/g to about 8.5 m$^2$/g, or from about 7.5 m$^2$/g to about 8.0 m$^2$/g, or from about 8.0 m$^2$/g to about 10.0 m$^2$/g, or from about 8.0 m$^2$/g to about 9.5 m$^2$/g, or from about 8.0 m$^2$/g to about 9.0 m$^2$/g, or from about 8.0 m$^2$/g to about 8.5 m$^2$/g, or from about 8.5 m$^2$/g to about 10.0 m$^2$/g, or from about 8.5 m$^2$/g to about 9.5 m$^2$/g, or from about 8.5 m$^2$/g to about 9.0 m$^2$/g, or from about 9.0 m$^2$/g to about 10.0 m$^2$/g, or from about 9.0 m$^2$/g to about 9.5 m$^2$/g, or from about 9.5 m$^2$/g to about 10.0 m$^2$/g.

In certain embodiments, the talc particulate has a specific surface area, BET, of from about 6.0 m$^2$/g to about 9.0 m$^2$/g, for example, from about 7.0 m$^2$/g to about 8.0 m$^2$/g, or from about 7.3 m$^2$/g to about 7.9 m$^2$/g, for example, of about 7.6 m$^2$/g.

In certain embodiments, the talc particulate has a specific surface area, BET, of from about 5.0 m$^2$/g to about 7.0 m$^2$/g, for example, from about 5.5 m$^2$/g to about 6.5 m$^2$/g, or from about 5.6 m$^2$/g to about 6.2 m$^2$/g, for example, of about 5.9 m$^2$/g.

In certain embodiments, the talc particulate has a specific surface area, BET, of from about 3.0 m$^2$/g to about 5.0 m$^2$/g, for example, from about 3.5 m$^2$/g to about 4.5 m$^2$/g, or from about 4.0 m$^2$/g to about 4.5 m$^2$/g, for example, of about 4.2 m$^2$/g.

In certain embodiments, the talc particulate has a specific surface area, BET, of from about 1.5 m$^2$/g to about 3.5 m$^2$/g, for example, from about 2.0 m$^2$/g to about 3.0 m$^2$/g, or from about 2.3 m$^2$/g to about 2.9 m$^2$/g, for example, of about 2.6 m$^2$/g.

The talc particulate may have a d50, by laser (also referred to herein as $d_{50laser}$), of no less than about 10.0 $\mu$m, for example, no less than about 10.5 $\mu$m, or no less than about 11.0 $\mu$m, or no less than about 11.5 $\mu$m, or no less than about 12.0 $\mu$m, or no less than about 12.5 $\mu$m, or no less than about 13.0 $\mu$m, or no less than about 13.5 $\mu$m, or no less than about 14.0 $\mu$m, or no less than about 14.5 $\mu$m. The talc particulate may have a $d_{50laser}$ of no greater than about 15.0 $\mu$m, for example, no greater than about 14.5 $\mu$m, or no greater than about 14.0 $\mu$m, or no greater than about 13.5 $\mu$m, or no greater than about 13.0 $\mu$m, or no greater than about 12.5 $\mu$m, or no greater than about 12.0 $\mu$m, or no greater than about 11.5 $\mu$m. The talc particulate may have a $d_{50laser}$ from about 10.0 $\mu$m to about 15.0 $\mu$m, for example, from about 10.5 $\mu$m to about 15.0 $\mu$m, or from about 11.0 $\mu$m to about 15.0 $\mu$m, or from about 11.5 $\mu$m to about 15.0 $\mu$m, or from about 12.0 $\mu$m to about 15.0 $\mu$m, or from about 12.5 $\mu$m to about 15.0 $\mu$m, or from about 13.0 $\mu$m to about 15.0 $\mu$m, or from about 13.5 $\mu$m to about 15.0 $\mu$m, or from about 14.0 $\mu$m to about 15.0 $\mu$m, or from about 14.5 $\mu$m to about 15.0 $\mu$m, or from about 10.0 $\mu$m to about 14.5 $\mu$m, or from about 10.5 $\mu$m to about 14.5 $\mu$m, or from about 11.0 $\mu$m to about 14.5 $\mu$m, or from about 11.5 $\mu$m to about 14.5 $\mu$m, or from about 12.0 $\mu$m to about 14.5 $\mu$m, or from about 12.5 $\mu$m to about 14.5 $\mu$m, or from about 13.0 $\mu$m to about 14.5 $\mu$m, or from about 13.5 $\mu$m to about 14.5 $\mu$m, or from about 14.0 $\mu$m to about 14.5 $\mu$m, or from about 10.0 $\mu$m to about 14.0 $\mu$m, or from about 10.5 $\mu$m to about 14.0 $\mu$m, or from about 11.0 $\mu$m to about 14.0 $\mu$m, or from about 11.5 $\mu$m to about 14.0 $\mu$m, or from about 12.0 $\mu$m to about 14.0 $\mu$m, or from about 12.5 $\mu$m to about 14.0 $\mu$m, or from about 13.0 $\mu$m to about 14.0 $\mu$m, or from about 13.5 $\mu$m to about 14.0 $\mu$m, or from about 10.0 $\mu$m to about 13.5 $\mu$m, or from about 10.5 $\mu$m to about 13.5 $\mu$m, or from about 11.0 $\mu$m to about 13.5 $\mu$m, or from about 11.5 $\mu$m to about 13.5 $\mu$m, or from about 12.0 $\mu$m to about 13.5 $\mu$m, or from about 12.5

$\mu$m to about 13.5 $\mu$m, or from about 13.0 $\mu$m to about 13.5 $\mu$m, or from about 10.0 $\mu$m to about 13.0 $\mu$m, or from about 10.5 $\mu$m to about 13.0 $\mu$m, or from about 11.0 $\mu$m to about 13.0 $\mu$m, or from about 11.5 $\mu$m to about 13.0 $\mu$m, or from about 12.0 $\mu$m to about 13.0 $\mu$m, or from about 12.5 $\mu$m to about 13.0 $\mu$m, or from about 10.0 $\mu$m to about 12.5 $\mu$m, or from about 10.5 $\mu$m to about 12.5 $\mu$m, or from about 11.0 $\mu$m to about 12.5 $\mu$m, or from about 11.5 $\mu$m to about 12.5 $\mu$m, or from about 10.0 $\mu$m to about 12.0 $\mu$m, or from about 10.5 $\mu$m to about 12.0 $\mu$m, or from about 11.0 $\mu$m to about 12.0 $\mu$m, or from about 11.5 $\mu$m to about 12.0 $\mu$m, or from about 10.0 $\mu$m to about 11.5 $\mu$m, or from about 10.5 $\mu$m to about 11.5 $\mu$m, or from about 11.0 $\mu$m to about 11.5 $\mu$m, or from about 10.0 $\mu$m to about 11.0 $\mu$m, or from about 10.5 $\mu$m to about 11.0 $\mu$m, or from about 10.0 $\mu$m to about 10.5 $\mu$m.

In certain embodiments, the talc particulate has a $d_{50laser}$ of from about from about 10.5 $\mu$m to about 13.0 $\mu$m, for example, from about from about 11.0 $\mu$m to about 12.0 $\mu$m, or from about 11.2 $\mu$m to about 11.7 $\mu$m, for example, of about 11.4 $\mu$m.

In certain embodiments, the talc particulate has a $d_{50laser}$ of from about from about 11.0 $\mu$m to about 13.0 $\mu$m, for example, from about from about 11.5 $\mu$m to about 12.5 $\mu$m, or from about 11.6 $\mu$m to about 12.1 $\mu$m, for example of about 11.9 $\mu$m.

In certain embodiments, the talc particulate has a $d_{50laser}$ of from about from about 12.0 $\mu$m to about 14.0 $\mu$m, for example, from about from about 12.5 $\mu$m to about 13.5 $\mu$m, or from about 12.5 $\mu$m to about 13.1 $\mu$m, for example, of about 12.8 $\mu$m.

In certain embodiments, the talc particulate has a $d_{50laser}$ of from about from about 13.0 $\mu$m to about 15.0 $\mu$m, for example, from about from about 14.0 $\mu$m to about 15.0 $\mu$m, or from about 14.0 $\mu$m to about 14.6 $\mu$m, for example, of about 14.3 $\mu$m.

The talc particulate may have a $d_{50}$, by sedigraph (also referred to herein as $d_{50sedi}$), no greater than about 7.5 $\mu$m, for example, no greater than about 6.5 $\mu$m, or no greater than about 6.0 $\mu$m, or no greater than about 5.5 $\mu$m, or no greater than about 5.0 $\mu$m, or no greater than about 4.5 $\mu$m, or no greater than about 4.0 $\mu$m, or no greater than about 3.5 $\mu$m, or no greater than about 3.0 $\mu$m, or no greater than about 2.5 $\mu$m. The talc particulate may have a $d_{50}$, by sedigraph (also referred to herein as $d_{50sedi}$), no less than about 1.0 $\mu$m, for example, no less than about 1.5 $\mu$m, or no less than about 2.0 $\mu$m, or no less than about 2.5 $\mu$m, or no less than about 3.0 $\mu$m, or no less than about 3.5 $\mu$m, or no less than about 4.0 $\mu$m, or no less than about 4.5 $\mu$m, or no less than about 5.0 $\mu$m, or no less than about 5.5 $\mu$m, or no less than about 6.0 $\mu$m, or no less than about 6.5 $\mu$m, or no less than about 7.0 $\mu$m. The talc particulate may have a $d_{50}$, by sedigraph (also referred to herein as $d_{50sedi}$), from about 1.0 $\mu$m to about 7.5 $\mu$m, for example, from about 1.0 $\mu$m to about 7.0 $\mu$m, or from about 1.0 $\mu$m to about 6.5 $\mu$m, or from about 1.0 $\mu$m to about 6.0 $\mu$m, or from about 1.0 $\mu$m to about 5.5 $\mu$m, or from about 1.0 $\mu$m to about 5.0 $\mu$m, or from about 1.0 $\mu$m to about 4.5 $\mu$m, or from about 1.0 $\mu$m to about 4.0 $\mu$m, or from about 1.0 $\mu$m to about 3.5 $\mu$m, or from about 1.0 $\mu$m to about 3.0 $\mu$m, or from about 1.0 $\mu$m to about 2.5 $\mu$m, or from about 1.5 $\mu$m to about 7.5 $\mu$m, or from about 1.5 $\mu$m to about 7.0 $\mu$m, or from about 1.5 $\mu$m to about 6.5 $\mu$m, or from about 1.5 $\mu$m to about 6.0 $\mu$m, or from about 1.5 $\mu$m to about 5.5 $\mu$m, or from about 1.5 $\mu$m to about 5.0 $\mu$m, or from about 1.5 $\mu$m to about 4.5 $\mu$m, or from about 1.5 $\mu$m to about 4.0 $\mu$m, or from about 1.5 $\mu$m to about 3.5 $\mu$m, or from about 1.5 $\mu$m to about 3.0 $\mu$m, or from about 1.5 $\mu$m to about 2.5 $\mu$m, or from about 2.0 $\mu$m to about 7.5 $\mu$m, or from about 2.0 $\mu$m to about 7.0 $\mu$m, or from about 2.0 $\mu$m to about 6.5 $\mu$m, or from about 2.0 $\mu$m to about 6.0 $\mu$m, or from about 2.0 $\mu$m to about 5.5 $\mu$m, or from about 2.0 $\mu$m to about 5.0 $\mu$m, or from about 2.0 $\mu$m to about 4.5 $\mu$m, or from about 2.0 $\mu$m to about 4.0 $\mu$m, or from about 2.0 $\mu$m to about 3.5 $\mu$m, or from about 2.0 $\mu$m to about 3.0 $\mu$m, or from about 2.0 $\mu$m to about 2.5 $\mu$m, or from about 2.5 $\mu$m to about 7.5 $\mu$m, or from about 2.5 $\mu$m to about 7.0 $\mu$m, or from about 2.5 $\mu$m to about 6.5 $\mu$m, or from about 2.5 $\mu$m to about 6.0 $\mu$m, or from about 2.5 $\mu$m to about 5.5 $\mu$m, or from about 2.5 $\mu$m to about 5.0 $\mu$m, or from about 2.5 $\mu$m to about 4.5 $\mu$m, or from about 2.5 $\mu$m to about 4.0 $\mu$m, or from about 2.5 $\mu$m to about 3.5 $\mu$m, or from about 2.5 $\mu$m to about 3.0 $\mu$m, or from about 3.0 $\mu$m to about 7.5 $\mu$m, or from about 3.0 $\mu$m to about 7.0 $\mu$m, or from about 3.0 $\mu$m to about 6.5 $\mu$m, or from about 3.0 $\mu$m to about 6.0 $\mu$m, or from about 3.0 $\mu$m to about 5.5 $\mu$m, or from about 3.0 $\mu$m to about 5.0 $\mu$m, or from about 3.0 $\mu$m to about 4.5 $\mu$m, or from about 3.0 $\mu$m to about 4.0 $\mu$m, or from about 3.0 $\mu$m to about 3.5 $\mu$m, or from about 3.5 $\mu$m to about 7.5 $\mu$m, or from about 3.5 $\mu$m to about 7.0 $\mu$m, or from about 3.5 $\mu$m to about 6.5 $\mu$m, or from about 3.5 $\mu$m to about 6.0 $\mu$m, or from about 3.5 $\mu$m to about 5.5 $\mu$m, or from about 3.5 $\mu$m to about 5.0 $\mu$m, or from about 3.5 $\mu$m to about 4.5 $\mu$m, or from about 3.5 $\mu$m to about 4.0 $\mu$m, or from about 4.0 $\mu$m to about 7.5 $\mu$m, or from about 4.0 $\mu$m to about 7.0 $\mu$m, or from about 4.0 $\mu$m to about 6.5 $\mu$m, or from about 4.0 $\mu$m to about 6.0 $\mu$m, or from about 4.0 $\mu$m to about 5.5 $\mu$m, or from about 4.0 $\mu$m to about 5.0 $\mu$m, or from about 4.0 $\mu$m to about 4.5 $\mu$m, or from about 4.5 $\mu$m to about 7.5 $\mu$m, or from about 4.5 $\mu$m to about 7.0 $\mu$m, or from about 4.5 $\mu$m to about 6.5 $\mu$m, or from about 4.5 $\mu$m to about 6.0 $\mu$m, or from about 4.5 $\mu$m to about 5.5 $\mu$m, or from about 4.5 $\mu$m to about 5.0 $\mu$m, or from about 5.0 $\mu$m to about 7.5 $\mu$m, or from about 5.0 $\mu$m to about 7.0 $\mu$m, or from about 5.0 $\mu$m to about 6.5 $\mu$m, or from about 5.0 $\mu$m to about 6.0 $\mu$m, or from about 5.0 $\mu$m to about 5.5 $\mu$m, or from about 5.5 $\mu$m to about 7.5 $\mu$m, or from about 5.5 $\mu$m to about 7.0 $\mu$m, or from about 5.5 $\mu$m to about 6.5 $\mu$m, or from about 5.5 $\mu$m to about 6.0 $\mu$m, or from about 6.0 $\mu$m to about 7.5 $\mu$m, or from about 6.0 $\mu$m to about 7.0 $\mu$m, or from about 6.0 $\mu$m to about 6.5 $\mu$m, or from about 6.5 $\mu$m to about 7.5 $\mu$m, or from about 6.5 $\mu$m to about 7.0 $\mu$m, or from about 7.0 $\mu$m to about 7.5 $\mu$m.

In certain embodiments, the talc particulate has a $d_{50sedi}$ of from about 1.5 $\mu$m to about 3.5 $\mu$m, for example, from about 2.0 $\mu$m to about 3.0 $\mu$m, or from about 2.1 $\mu$m to about 2.7 $\mu$m, or from about 2.3 $\mu$m to about 2.5 $\mu$m, for example, of about 2.4 $\mu$m.

In certain embodiments, the talc particulate has a $d_{50sedi}$ of from about 2.0 $\mu$m to about 4.0 $\mu$m, for example, from about 2.5 $\mu$m to about 3.1 $\mu$m, or from about 2.6 $\mu$m to about 3.0 $\mu$m, for example, of about 2.8 $\mu$m.

In certain embodiments, the talc particulate has a $d_{50sedi}$ of from about 2.5 $\mu$m to about 4.5 $\mu$m, for example, from about 3.0 $\mu$m to about 4.0 $\mu$m, or from about 3.3 $\mu$m to about 3.9 $\mu$m, for example, of about 3.6 $\mu$m.

In certain embodiments, the talc particulate has a $d_{50sedi}$ of from about 4.0 $\mu$m to about 7.0 $\mu$m, for example, from about 4.8 $\mu$m to about 5.8 $\mu$m, or from about 5.0 $\mu$m to about 5.6 $\mu$m, for example, of about 5.3 $\mu$m.

The talc particulate may have a lamellarity index of no less than about 0.5, for example, no less than about 1.0, or no less than about 1.5, or no less than about 1.6, or no less than about 2.0, or no less than about 2.5, or no less than about 3.0, or no less than about 3.5, or no less than about 4.0, or no less than about 4.5. The talc particulate may have a lamellarity index no greater than about 5.0, for example, no greater than about 4.5, or no greater than about 4.0, or no greater than about 3.5, or no greater than about 3.0, or no greater than about 2.5, or no greater than about 2.0. The talc particulate may have a lamellarity index from about 0.5 to about 5.0, for example, from about 0.5 to about 3.5, or from about 0.5 to about 2.5, or from about 0.5 to about 2.0, or from about 1.0 to about 5.0, or from about 1.0 to about 3.5, or from about 1.0 to about 2.5, or from about 1.0 to about 2.0, or from about 1.5 to about 5.0, or from about 1.5 to about 3.5, or from about 1.5 to about 2.5, or from about 1.5 to about 2.0, or from about 1.6 to about 5.0, from about 2.0 to about 5.0, or from about 2.5 to about 5.0, or from about 3.0 to about 5.0, or from about 3.5 to about 5.0, or from about 4.0 to about 5.0, or from about 4.5 to about 5.0, or from about 1.6 to about 4.5, or from about 2.0 to about 4.5, or from about 2.5 to about 4.5, or from about 3.0 to about 4.5, or from about 3.5 to about 4.5, or from about 4.0 to about 4.5, or from about 1.6 to about 4.0, or from about 2.0 to about 4.0, or from about 2.5 to about 4.0, or from about 3.0 to about 4.0, or from about 3.5 to about 4.0, or from about 1.6 to about 3.0, or from about 2.0 to about 3.0, or from about 2.5 to about 3.0, or from about 1.6 to about 2.5, or from about 2.0 to about 2.5, or from about 1.6 to about 2.0.

In certain embodiments, the talc particulate has a lamellarity index of from about 3.0 to about 5.0, for example, from about 3.2 to about 4.4, or from about 3.5 to about 4.1, for example, of about 3.8.

In certain embodiments, the talc particulate has a lamellarity index of from about 2.5 to about 4.0, for example, from about 2.9 to about 3.7, or from about 3.0 to about 3.6, for example, of about 3.3.

In certain embodiments, the talc particulate has a lamellarity index of from about 1.5 to about 3.5, for example, from about 2.0 to about 3.2, or from about 2.3 to about 2.9, for example, of about 2.6.

In certain embodiments, the talc particulate has a lamellarity index of from about 0.5 to about 2.5, for example, from about 1.0 to about 2.5, or from about 1.5 to about 2.0, or from about 1.6 to about 2.0, for example, of about 1.7.

A ratio (R) of lamellarity index (LI) to BET specific surface area for the talc particulate may be defined as:

$$R = \frac{LI}{BET\ specific\ surface\ area}$$

The talc particulate may have a ratio of lamellarity index to BET specific surface area of at least about 0.4 $g/m^2$ (e.g. at least about 0.40 $g/m^2$), for example, at least about 0.5 $g/m^2$ (e.g. at least about 0.50 $g/m^2$), or at least about 0.55 $g/m^2$, or at least about 0.6 $g/m^2$ (e.g. at least about 0.60 $g/m^2$), or at least about 0.65 $g/m^2$. The talc particulate may have a ratio of lamellarity index to BET specific surface area of no greater than about 1.0 $g/m^2$ (e.g. no greater than about 1.00 $g/m^2$), for example, no greater than about 0.8 $g/m^2$ (e.g. no greater than about 0.80 $g/m^2$), or no greater than about 0.7 $g/m^2$ (e.g. no greater than about 0.70 $g/m^2$), or no greater than about 0.65 $g/m^2$, or no greater than about 0.6 $g/m^2$ (e.g. no greater than about 0.60 $g/m^2$), or no greater than about 0.55 $g/m^2$, or no greater than about 0.5 $g/m^2$ (e.g. no greater than about 0.50 $g/m^2$). The talc particulate may have a ratio of lamellarity index to BET specific surface area from about 0.4 $g/m^2$ (e.g. about 0.40 $g/m^2$) to about 1.0 $g/m^2$ (e.g. about 1.00 $g/m^2$), for example, from about 0.4 $g/m^2$ (e.g. about 0.40 $g/m^2$) to about 0.8 $g/m^2$ (e.g. about 0.80 $g/m^2$), or from about 0.4 $g/m^2$ (e.g. about 0.40 $g/m^2$) to about 0.7 $g/m^2$ (e.g. about 0.70 $g/m^2$), or from about 0.4 $g/m^2$ (e.g. about 0.40 $g/m^2$) to about 0.65 $g/m^2$, or from about 0.4 $g/m^2$ (e.g. about 0.40 $g/m^2$) to about 0.6 $g/m^2$ (e.g. about 0.60 $g/m^2$), or from about 0.4 $g/m^2$ (e.g. about 0.40 $g/m^2$) to about 0.55 $g/m^2$, or from about 0.4 $g/m^2$ (e.g. about 0.40 $g/m^2$) to about 0.5 $g/m^2$ (e.g. about 0.50 $g/m^2$), or from about 0.5 $g/m^2$ (e.g. about 0.50 $g/m^2$) to about 1.0 $g/m^2$ (e.g. about 1.00 $g/m^2$), or from about 0.5 $g/m^2$ (e.g. about 0.50 $g/m^2$) to about 0.8 $g/m^2$ (e.g. about 0.80 $g/m^2$), or from about 0.5 $g/m^2$ (e.g. about 0.50 $g/m^2$) to about 0.7 $g/m^2$ (e.g. about 0.70 $g/m^2$), or from about 0.5 $g/m^2$ (e.g. about 0.50 $g/m^2$) to about 0.65 $g/m^2$, or from about 0.5 $g/m^2$ (e.g. about 0.50 $g/m^2$) to about 0.6 $g/m^2$ (e.g. about 0.60 $g/m^2$), or from about 0.5 $g/m^2$ (e.g. about 0.50 $g/m^2$) to about 0.55 $g/m^2$, or from about 0.55 $g/m^2$ to about 1.0 $g/m^2$ (e.g. about 1.00 $g/m^2$), or from about 0.55 $g/m^2$ to about 0.8 $g/m^2$ (e.g. about 0.80 $g/m^2$), or from about 0.55 $g/m^2$ to about 0.7 $g/m^2$ (e.g. about 0.70 $g/m^2$), or from about 0.55 $g/m^2$ to about 0.65 $g/m^2$, or from about 0.55 $g/m^2$ to about 0.6 $g/m^2$ (e.g. about 0.60 $g/m^2$), or from about 0.6 $g/m^2$ (e.g. about 0.60 $g/m^2$) to about

1.0 g/m$^2$ (e.g. about 1.00 g/m$^2$), or from about 0.6 g/m$^2$ (e.g. about 0.60 g/m$^2$) to about 0.8 g/m$^2$ (e.g. about 0.80 g/m$^2$), or from about 0.6 g/m$^2$ (e.g. about 0.60 g/m$^2$) to about 0.7 g/m$^2$ (e.g. about 0.70 g/m$^2$), or from about 0.6 g/m$^2$ (e.g. about 0.60 g/m$^2$) to about 0.65 g/m$^2$, or from about 0.65 g/m$^2$ to about 1.0 g/m$^2$ (e.g. about 1.00 g/m$^2$), or from about 0.65 g/m$^2$ to about 0.8 g/m$^2$ (e.g. about 0.80 g/m$^2$), or from about 0.65 g/m$^2$ to about 0.7 g/m$^2$ (e.g. about 0.70 g/m$^2$).

In certain embodiments, the talc particulate has a ratio of lamellarity index to BET specific surface area of from about 0.45 g/m$^2$ to about 0.55 g/m$^2$, for example from about 0.47 to about 0.53 g/m$^2$, for example, of about 0.5 g/m$^2$ (e.g. about 0.50 g/m$^2$).

In certain embodiments, the talc particulate has a ratio of lamellarity index to BET specific surface area of from about 0.5 g/m$^2$ (e.g. from about 0.50 g/m$^2$) to about 0.6 g/m$^2$ (e.g. to about 0.60 g/m$^2$), for example, from about 0.52 g/m$^2$ to about 0.58 g/m$^2$, for example, of about 0.56 g/m$^2$.

In certain embodiments, the talc particulate has a ratio of lamellarity index to BET specific surface area of from about 0.55 g/m$^2$ to about 0.7 g/m$^2$ (e.g. to about 0.70 g/m$^2$), for example, from about 0.59 g/m$^2$ to about 0.65 g/m$^2$, or from about 0.60 g/m$^2$ to about 0.64 g/m$^2$, for example, of about 0.62 g/m$^2$.

In certain embodiments, the talc particulate has a ratio of lamellarity index to BET specific surface area of from about 0.6 g/m$^2$ (e.g. from about 0.60 g/m$^2$) to about 0.7 g/m$^2$ (e.g. to about 0.70 g/m$^2$), for example, from about 0.62 g/m$^2$ to about 0.68 g/m$^2$, for example, of about 0.65 g/m$^2$.

The talc particulate may have: a BET specific surface area from about 2.0 m$^2$/g to about 10.0 m$^2$/g, for example, from about 2.0 m$^2$/g to about 9.5 m$^2$/g, or from about 2.0 m$^2$/g to about 9.0 m$^2$/g, or from about 2.0 m$^2$/g to about 8.5 m$^2$/g, or from about 2.0 m$^2$/g to about 8.0 m$^2$/g, or from about 2.0 m$^2$/g to about 7.5 m$^2$/g, or from about 2.0 m$^2$/g to about 7.0 m$^2$/g, or from about 2.0 m$^2$/g to about 6.5 m$^2$/g, or from about 2.0 m$^2$/g to about 6.0 m$^2$/g, or from about 2.0 m$^2$/g to about 5.5 m$^2$/g, or from about 2.0 m$^2$/g to about 5.0 m$^2$/g, or from about 2.0 m$^2$/g to about 4.5 m$^2$/g, or from about 2.0 m$^2$/g to about 4.0 m$^2$/g, or from about 2.0 m$^2$/g to about 3.5 m$^2$/g, or from about 2.0 m$^2$/g to about 3.0 m$^2$/g, or from about 2.5 m$^2$/g to about 10.0 m$^2$/g, or from about 2.5 m$^2$/g to about 9.5 m$^2$/g, or from about 2.5 m$^2$/g to about 9.0 m$^2$/g, or from about 2.5 m$^2$/g to about 8.5 m$^2$/g, or from about 2.5 m$^2$/g to about 8.0 m$^2$/g, or from about 2.5 m$^2$/g to about 7.5 m$^2$/g, or from about 2.5 m$^2$/g to about 7.0 m$^2$/g, or from about 2.5 m$^2$/g to about 6.5 m$^2$/g, or from about 2.5 m$^2$/g to about 6.0 m$^2$/g, or from about 2.5 m$^2$/g to about 5.5 m$^2$/g, or from about 2.5 m$^2$/g to about 5.0 m$^2$/g, or from about 2.5 m$^2$/g to about 4.5 m$^2$/g, or from about 2.5 m$^2$/g to about 4.0 m$^2$/g, or from about 2.5 m$^2$/g to about 3.5 m$^2$/g, or from about 2.5 m$^2$/g to about 3.0 m$^2$/g, or from about 3.0 m$^2$/g to about 10.0 m$^2$/g, or from about 3.0 m$^2$/g to about 9.5 m$^2$/g, or from about 3.0 m$^2$/g to about 9.0 m$^2$/g, or from about 3.0 m$^2$/g to about 8.5 m$^2$/g, or from about 3.0 m$^2$/g to about 8.0 m$^2$/g, or from about 3.0 m$^2$/g to about 7.5 m$^2$/g, or from about 3.0 m$^2$/g to about 7.0 m$^2$/g, or from about 3.0 m$^2$/g to about 6.5 m$^2$/g, or from about 3.0 m$^2$/g to about 6.0 m$^2$/g, or from about 3.0 m$^2$/g to about 5.5 m$^2$/g, or from about 3.0 m$^2$/g to about 5.0 m$^2$/g, or from about 3.0 m$^2$/g to about 4.5 m$^2$/g, or from about 3.0 m$^2$/g to about 4.0 m$^2$/g, or from about 3.0 m$^2$/g to about 3.5 m$^2$/g, or from about 3.5 m$^2$/g to about 10.0 m$^2$/g, or from about 3.5 m$^2$/g to about 9.5 m$^2$/g, or from about 3.5 m$^2$/g to about 9.0 m$^2$/g, or from about 3.5 m$^2$/g to about 8.5 m$^2$/g, or from about 3.5 m$^2$/g to about 8.0 m$^2$/g, or from about 3.5 m$^2$/g to about 7.5 m$^2$/g, or from about 3.5 m$^2$/g to about 7.0 m$^2$/g, or from about 3.5 m$^2$/g to about 6.5 m$^2$/g, or from about 3.5 m$^2$/g to about 6.0 m$^2$/g, or from about 3.5 m$^2$/g to about 5.5 m$^2$/g, or from about 3.5 m$^2$/g to about 5.0 m$^2$/g, or from about 3.5 m$^2$/g to about 4.5 m$^2$/g, or from about 3.5 m$^2$/g to about 4.0 m$^2$/g, or from about 4.0 m$^2$/g to about 10.0 m$^2$/g, or from about 4.0 m$^2$/g to about 9.5 m$^2$/g, or from about 4.0 m$^2$/g to about 9.0 m$^2$/g, or from about 4.0 m$^2$/g to about 8.5 m$^2$/g, or from about 4.0 m$^2$/g to about 8.0 m$^2$/g, or from about 4.0 m$^2$/g to about 7.5 m$^2$/g, or from about 4.0 m$^2$/g to about 7.0 m$^2$/g, or from about 4.0 m$^2$/g to about 6.5 m$^2$/g, or from about 4.0 m$^2$/g to about 6.0 m$^2$/g, or from about 4.0 m$^2$/g to about 5.5 m$^2$/g, or from about 4.0 m$^2$/g to about 5.0 m$^2$/g, or from about 4.0 m$^2$/g to about 4.5 m$^2$/g, or from about 4.5 m$^2$/g to about 10.0 m$^2$/g, or from about 4.5 m$^2$/g to about 9.5 m$^2$/g, or from about 4.5 m$^2$/g to about 9.0 m$^2$/g, or from about 4.5 m$^2$/g to about 8.5 m$^2$/g, or from about 4.5 m$^2$/g to about 8.0 m$^2$/g, or from about 4.5 m$^2$/g to about 7.5 m$^2$/g, or from about 4.5 m$^2$/g to about 7.0 m$^2$/g, or from about 4.5 m$^2$/g to about 6.5 m$^2$/g, or from about 4.5 m$^2$/g to about 6.0 m$^2$/g, or from about 4.5 m$^2$/g to about 5.5 m$^2$/g, or from about 4.5 m$^2$/g to about 5.0 m$^2$/g, or from about 4.5 m$^2$/g to about 4.5 m$^2$/g, or from about 5.0 m$^2$/g to about 10.0 m$^2$/g, or from about 5.0 m$^2$/g to about 9.5 m$^2$/g, or from about 5.0 m$^2$/g to about 9.0 m$^2$/g, or from about 5.0 m$^2$/g to about 8.5 m$^2$/g, or from about 5.0 m$^2$/g to about 8.0 m$^2$/g, or from about 5.0 m$^2$/g to about 7.5 m$^2$/g, or from about 5.0 m$^2$/g to about 7.0 m$^2$/g, or from about 5.0 m$^2$/g to about 6.5 m$^2$/g, or from about 5.0 m$^2$/g to about 6.0 m$^2$/g, or from about 5.0 m$^2$/g to about 5.5 m$^2$/g, or from about 5.5 m$^2$/g to about 10.0 m$^2$/g, or from about 5.5 m$^2$/g to about 9.5 m$^2$/g, or from about 5.5 m$^2$/g to about 9.0 m$^2$/g, or from about 5.5 m$^2$/g to about 8.5 m$^2$/g, or from about 5.5 m$^2$/g to about 8.0 m$^2$/g, or from about 5.5 m$^2$/g to about 7.5 m$^2$/g, or from about 5.5 m$^2$/g to about 7.0 m$^2$/g, or from about 5.5 m$^2$/g to about 6.5 m$^2$/g, or from about 5.5 m$^2$/g to about 6.0 m$^2$/g, or from about 5.5 m$^2$/g to about 5.5 m$^2$/g, or from about 6.0 m$^2$/g to about 10.0 m$^2$/g, or from about 6.0 m$^2$/g to about 9.5 m$^2$/g, or from about 6.0 m$^2$/g to about 9.0 m$^2$/g, or from about 6.0 m$^2$/g to about 8.5 m$^2$/g, or from about 6.0 m$^2$/g to about 8.0 m$^2$/g, or from about 6.0 m$^2$/g to about 7.5 m$^2$/g, or from about 6.0 m$^2$/g to about 7.0 m$^2$/g, or from about 6.0 m$^2$/g to about 6.5 m$^2$/g, or from about 6.5 m$^2$/g to about 10.0 m$^2$/g, or from about 6.5 m$^2$/g to about 9.5 m$^2$/g, or from about 6.5 m$^2$/g to about 9.0 m$^2$/g, or from about 6.5 m$^2$/g to about 8.5 m$^2$/g, or from about 6.5 m$^2$/g to about 8.0 m$^2$/g, or from about 6.5 m$^2$/g to about 7.5 m$^2$/g, or from about 6.5 m$^2$/g to about 7.0

$m^2/g$, or from about 7.0 $m^2/g$ to about 10.0 $m^2/g$, or from about 7.0 $m^2/g$ to about 9.5 $m^2/g$, or from about 7.0 $m^2/g$ to about 9.0 $m^2/g$, or from about 7.0 $m^2/g$ to about 8.5 $m^2/g$, or from about 7.0 $m^2/g$ to about 8.0 $m^2/g$, or from about 7.0 $m^2/g$ to about 7.5 $m^2/g$, or from about 7.5 $m^2/g$ to about 10.0 $m^2/g$, or from about 7.5 $m^2/g$ to about 9.5 $m^2/g$, or from about 7.5 $m^2/g$ to about 9.0 $m^2/g$, or from about 7.5 $m^2/g$ to about 8.5 $m^2/g$, or from about 7.5 $m^2/g$ to about 8.0 $m^2/g$, or from about 8.0 $m^2/g$ to about 10.0 $m^2/g$, or from about 8.0 $m^2/g$ to about 9.5 $m^2/g$, or from about 8.0 $m^2/g$ to about 9.0 $m^2/g$, or from about 8.0 $m^2/g$ to about 8.5 $m^2/g$, or from about 8.5 $m^2/g$ to about 10.0 $m^2/g$, or from about 8.5 $m^2/g$ to about 9.5 $m^2/g$, or from about 8.5 $m^2/g$ to about 9.0 $m^2/g$, or from about 9.0 $m^2/g$ to about 10.0 $m^2/g$, or from about 9.0 $m^2/g$ to about 9.5 $m^2/g$, or from about 9.5 $m^2/g$ to about 10.0 $m^2/g$; a $d_{50laser}$ from about 10.0 $\mu m$ to about 15.0 $\mu m$, for example, from about 10.5 $\mu m$ to about 15.0 $\mu m$, or from about 11.0 $\mu m$ to about 15.0 $\mu m$, or from about 11.5 $\mu m$ to about 15.0 $\mu m$, or from about 12.0 $\mu m$ to about 15.0 $\mu m$, or from about 12.5 $\mu m$ to about 15.0 $\mu m$, or from about 13.0 $\mu m$ to about 15.0 $\mu m$, or from about 13.5 $\mu m$ to about 15.0 $\mu m$, or from about 14.0 $\mu m$ to about 15.0 $\mu m$, or from about 14.5 $\mu m$ to about 15.0 $\mu m$, or from about 10.0 $\mu m$ to about 14.5 $\mu m$, or from about 10.5 $\mu m$ to about 14.5 $\mu m$, or from about 11.0 $\mu m$ to about 14.5 $\mu m$, or from about 11.5 $\mu m$ to about 14.5 $\mu m$, or from about 12.0 $\mu m$ to about 14.5 $\mu m$, or from about 12.5 $\mu m$ to about 14.5 $\mu m$, or from about 13.0 $\mu m$ to about 14.5 $\mu m$, or from about 13.5 $\mu m$ to about 14.5 $\mu m$, or from about 14.0 $\mu m$ to about 14.5 $\mu m$, or from about 10.0 $\mu m$ to about 14.0 $\mu m$, or from about 10.5 $\mu m$ to about 14.0 $\mu m$, or from about 11.0 $\mu m$ to about 14.0 $\mu m$, or from about 11.5 $\mu m$ to about 14.0 $\mu m$, or from about 12.0 $\mu m$ to about 14.0 $\mu m$, or from about 12.5 $\mu m$ to about 14.0 $\mu m$, or from about 13.0 $\mu m$ to about 14.0 $\mu m$, or from about 13.5 $\mu m$ to about 14.0 $\mu m$, or from about 10.0 $\mu m$ to about 13.5 $\mu m$, or from about 10.5 $\mu m$ to about 13.5 $\mu m$, or from about 11.0 $\mu m$ to about 13.5 $\mu m$, or from about 11.5 $\mu m$ to about 13.5 $\mu m$, or from about 12.0 $\mu m$ to about 13.5 $\mu m$, or from about 12.5 $\mu m$ to about 13.5 $\mu m$, or from about 13.0 $\mu m$ to about 13.5 $\mu m$, or from about 10.0 $\mu m$ to about 13.0 $\mu m$, or from about 10.5 $\mu m$ to about 13.0 $\mu m$, or from about 11.0 $\mu m$ to about 13.0 $\mu m$, or from about 11.5 $\mu m$ to about 13.0 $\mu m$, or from about 12.0 $\mu m$ to about 13.0 $\mu m$, or from about 12.5 $\mu m$ to about 13.0 $\mu m$, or from about 10.0 $\mu m$ to about 12.5 $\mu m$, or from about 10.5 $\mu m$ to about 12.5 $\mu m$, or from about 11.0 $\mu m$ to about 12.5 $\mu m$, or from about 11.5 $\mu m$ to about 12.5 $\mu m$, or from about 10.0 $\mu m$ to about 12.0 $\mu m$, or from about 10.5 $\mu m$ to about 12.0 $\mu m$, or from about 11.0 $\mu m$ to about 12.0 $\mu m$, or from about 11.5 $\mu m$ to about 12.0 $\mu m$, or from about 10.0 $\mu m$ to about 11.5 $\mu m$, or from about 10.5 $\mu m$ to about 11.5 $\mu m$, or from about 11.0 $\mu m$ to about 11.5 $\mu m$, or from about 10.0 $\mu m$ to about 11.0 $\mu m$, or from about 10.5 $\mu m$ to about 11.0 $\mu m$, or from about 10.0 $\mu m$ to about 10.5 $\mu m$; a $d_{50}$, by sedigraph (also referred to herein as $d_{50sedi}$), from about 1.0 $\mu m$ to about 7.5 $\mu m$, for example, from about 1.0 $\mu m$ to about 7.0 $\mu m$, or from about 1.0 $\mu m$ to about 6.5 $\mu m$, or from about 1.0 $\mu m$ to about 6.0 $\mu m$, or from about 1.0 $\mu m$ to about 5.5 $\mu m$, or from about 1.0 $\mu m$ to about 5.0 $\mu m$, or from about 1.0 $\mu m$ to about 4.5 $\mu m$, or from about 1.0 $\mu m$ to about 4.0 $\mu m$, or from about 1.0 $\mu m$ to about 3.5 $\mu m$, or from about 1.0 $\mu m$ to about 3.0 $\mu m$, or from about 1.0 $\mu m$ to about 2.5 $\mu m$, or from about 1.5 $\mu m$ to about 7.5 $\mu m$, or from about 1.5 $\mu m$ to about 7.0 $\mu m$, or from about 1.5 $\mu m$ to about 6.5 $\mu m$, or from about 1.5 $\mu m$ to about 6.0 $\mu m$, or from about 1.5 $\mu m$ to about 5.5 $\mu m$, or from about 1.5 $\mu m$ to about 5.0 $\mu m$, or from about 1.5 $\mu m$ to about 4.5 $\mu m$, or from about 1.5 $\mu m$ to about 4.0 $\mu m$, or from about 1.5 $\mu m$ to about 3.5 $\mu m$, or from about 1.5 $\mu m$ to about 3.0 $\mu m$, or from about 1.5 $\mu m$ to about 2.5 $\mu m$, or from about 2.0 $\mu m$ to about 7.5 $\mu m$, or from about 2.0 $\mu m$ to about 7.0 $\mu m$, or from about 2.0 $\mu m$ to about 6.5 $\mu m$, or from about 2.0 $\mu m$ to about 6.0 $\mu m$, or from about 2.0 $\mu m$ to about 5.5 $\mu m$, or from about 2.0 $\mu m$ to about 5.0 $\mu m$, or from about 2.0 $\mu m$ to about 4.5 $\mu m$, or from about 2.0 $\mu m$ to about 4.0 $\mu m$, or from about 2.0 $\mu m$ to about 3.5 $\mu m$, or from about 2.0 $\mu m$ to about 3.0 $\mu m$, or from about 2.0 $\mu m$ to about 2.5 $\mu m$, or from about 2.5 $\mu m$ to about 7.5 $\mu m$, or from about 2.5 $\mu m$ to about 7.0 $\mu m$, or from about 2.5 $\mu m$ to about 6.5 $\mu m$, or from about 2.5 $\mu m$ to about 6.0 $\mu m$, or from about 2.5 $\mu m$ to about 5.5 $\mu m$, or from about 2.5 $\mu m$ to about 5.0 $\mu m$, or from about 2.5 $\mu m$ to about 4.5 $\mu m$, or from about 2.5 $\mu m$ to about 4.0 $\mu m$, or from about 2.5 $\mu m$ to about 3.5 $\mu m$, or from about 2.5 $\mu m$ to about 3.0 $\mu m$, or from about 3.0 $\mu m$ to about 7.5 $\mu m$, or from about 3.0 $\mu m$ to about 7.0 $\mu m$, or from about 3.0 $\mu m$ to about 6.5 $\mu m$, or from about 3.0 $\mu m$ to about 6.0 $\mu m$, or from about 3.0 $\mu m$ to about 5.5 $\mu m$, or from about 3.0 $\mu m$ to about 5.0 $\mu m$, or from about 3.0 $\mu m$ to about 4.5 $\mu m$, or from about 3.0 $\mu m$ to about 4.0 $\mu m$, or from about 3.0 $\mu m$ to about 3.5 $\mu m$, or from about 3.5 $\mu m$ to about 7.5 $\mu m$, or from about 3.5 $\mu m$ to about 7.0 $\mu m$, or from about 3.5 $\mu m$ to about 6.5 $\mu m$, or from about 3.5 $\mu m$ to about 6.0 $\mu m$, or from about 3.5 $\mu m$ to about 5.5 $\mu m$, or from about 3.5 $\mu m$ to about 5.0 $\mu m$, or from about 3.5 $\mu m$ to about 4.5 $\mu m$, or from about 3.5 $\mu m$ to about 4.0 $\mu m$, or from about 4.0 $\mu m$ to about 7.5 $\mu m$, or from about 4.0 $\mu m$ to about 7.0 $\mu m$, or from about 4.0 $\mu m$ to about 6.5 $\mu m$, or from about 4.0 $\mu m$ to about 6.0 $\mu m$, or from about 4.0 $\mu m$ to about 5.5 $\mu m$, or from about 4.0 $\mu m$ to about 5.0 $\mu m$, or from about 4.0 $\mu m$ to about 4.5 $\mu m$, or from about 4.5 $\mu m$ to about 7.5 $\mu m$, or from about 4.5 $\mu m$ to about 7.0 $\mu m$, or from about 4.5 $\mu m$ to about 6.5 $\mu m$, or from about 4.5 $\mu m$ to about 6.0 $\mu m$, or from about 4.5 $\mu m$ to about 5.5 $\mu m$, or from about 4.5 $\mu m$ to about 5.0 $\mu m$, or from about 5.0 $\mu m$ to about 7.5 $\mu m$, or from about 5.0 $\mu m$ to about 7.0 $\mu m$, or from about 5.0 $\mu m$ to about 6.5 $\mu m$, or from about 5.0 $\mu m$ to about 6.0 $\mu m$, or from about 5.0 $\mu m$ to about 5.5 $\mu m$, or from about 5.5 $\mu m$ to about 7.5 $\mu m$, or from about 5.5 $\mu m$ to about 7.0 $\mu m$, or from about 5.5 $\mu m$ to about 6.5 $\mu m$, or from about 5.5 $\mu m$ to about 6.0 $\mu m$, or from about 6.0 $\mu m$ to about 7.5 $\mu m$, or from about 6.0 $\mu m$ to about 7.0 $\mu m$, or from about 6.0 $\mu m$ to about 6.5 $\mu m$, or from about 6.5 $\mu m$ to about 7.5 $\mu m$, or from about 6.5 $\mu m$ to about 7.0 $\mu m$, or from about 7.0 $\mu m$ to about 7.5 $\mu m$; and a lamellarity index from about 0.5 to about 5.0, for example, from about 0.5 to about 3.5, or from about 0.5 to about 2.5, or from about 0.5 to about 2.0, or from about 1.0 to about 5.0, or from about 1.0 to about 3.5, or from about 1.0 to about 2.5, or from about 1.0 to about 2.0, or from about 1.5 to about 5.0, or from about 1.5 to about 3.5, or from about 1.5 to about 2.5, or from about 1.5 to about 2.0, or from about 1.6 to about 5.0, from about 2.0 to about 5.0, or from about 2.5 to about 5.0, or from about 3.0 to about 5.0, or from about 3.5 to about 5.0, or from about 4.0 to about 5.0, or from about 4.5 to about 5.0, or from about 1.6 to about 4.5, or from about 2.0 to about 4.5, or from about 2.5 to about 4.5, or from about 3.0 to about 4.5, or from about 3.5 to about 4.5, or from about 4.0 to about 4.5, or from about 1.6 to about 4.0, or from about 2.0 to about 4.0, or from about 2.5 to about 4.0, or from about 3.0 to about 4.0, or from about 3.5 to about 4.0, or from about 1.6 to about 3.0, or from about 2.0 to about 3.0, or from about 2.5 to about 3.0, or from about 1.6 to about 2.5, or from about 2.0 to about 2.5, or from about 1.6 to about 2.0, wherein a ratio of the lamellarity index to the BET specific surface area is from about 0.4 $g/m^2$ (e.g. about 0.40 $g/m^2$) to about 1.0 $g/m^2$ (e.g. about 1.00 $g/m^2$), for example, from about 0.4 $g/m^2$ (e.g. about 0.40 $g/m^2$) to about 0.8 $g/m^2$ (e.g. about 0.80 $g/m^2$), or from about 0.4 $g/m^2$ (e.g. about 0.40 $g/m^2$) to about 0.7 $g/m^2$ (e.g. about 0.70 $g/m^2$), or from about 0.4 $g/m^2$ (e.g. about 0.40 $g/m^2$) to about 0.65 $g/m^2$, or from about 0.4 $g/m^2$ (e.g. about 0.40 $g/m^2$) to about 0.6 $g/m^2$ (e.g. about 0.60 $g/m^2$), or from about 0.4 $g/m^2$ (e.g. about 0.40 $g/m^2$) to about 0.55 $g/m^2$, or from about 0.4 $g/m^2$ (e.g. about 0.40 $g/m^2$) to about 0.5 $g/m^2$ (e.g. about 0.50 $g/m^2$), or from about 0.5 $g/m^2$ (e.g. about 0.50 $g/m^2$) to about 1.0 $g/m^2$ (e.g. about 1.00 $g/m^2$), or from about 0.5 $g/m^2$ (e.g. about 0.50 $g/m^2$) to about 0.8 $g/m^2$ (e.g. about 0.80 $g/m^2$), or from about 0.5 $g/m^2$ (e.g. about 0.50 $g/m^2$) to about 0.7 $g/m^2$ (e.g. about 0.70 $g/m^2$), or from about 0.5 $g/m^2$ (e.g. about 0.50 $g/m^2$) to about 0.65 $g/m^2$, or from about 0.5 $g/m^2$ (e.g. about 0.50 $g/m^2$) to about 0.6 $g/m^2$ (e.g. about 0.60 $g/m^2$), or from about 0.5 $g/m^2$ (e.g. about 0.50 $g/m^2$) to about 0.55 $g/m^2$, or from about 0.55 $g/m^2$ to about 1.0 $g/m^2$ (e.g. about 1.00 $g/m^2$), or from about 0.55 $g/m^2$ to about 0.8 $g/m^2$ (e.g. about 0.80 $g/m^2$), or from about 0.55 $g/m^2$ to about 0.7 $g/m^2$ (e.g. about 0.70 $g/m^2$), or from about 0.55 $g/m^2$ to about 0.65 $g/m^2$, or from about 0.55 $g/m^2$ to about 0.6 $g/m^2$ (e.g. about 0.60 $g/m^2$), or from about 0.6 $g/m^2$ (e.g. about 0.60 $g/m^2$) to about 1.0 $g/m^2$ (e.g. about 1.00 $g/m^2$), or from about 0.6 $g/m^2$ (e.g. about 0.60 $g/m^2$) to about 0.8 $g/m^2$ (e.g. about 0.80 $g/m^2$), or from about 0.6 $g/m^2$ (e.g. about 0.60 $g/m^2$) to about 0.7 $g/m^2$ (e.g. about 0.70 $g/m^2$), or from about 0.6 $g/m^2$ (e.g. about 0.60 $g/m^2$) to about 0.65 $g/m^2$, or from about 0.65 $g/m^2$ to about 1.0 $g/m^2$ (e.g. about 1.00 $g/m^2$), or from about 0.65 $g/m^2$ to about 0.8 $g/m^2$ (e.g. about 0.80 $g/m^2$), or from about 0.65 $g/m^2$ to about 0.7 $g/m^2$ (e.g. about 0.70 $g/m^2$).

In certain embodiments, the talc particulate has: a specific surface area, BET, of from about 6.0 $m^2/g$ to about 9.0 $m^2/g$, for example, from about 7.0 $m^2/g$ to about 8.0 $m^2/g$, or from about 7.3 $m^2/g$ to about 7.9 $m^2/g$, for example, of about 7.6 $m^2/g$; a $d_{50laser}$ of from about from about 10.5 $\mu$m to about 13.0 $\mu$m, for example, from about from about 11.0 $\mu$m to about 12.0 $\mu$m, or from about 11.2 $\mu$m to about 11. 7 $\mu$m, for example, of about 11.4 $\mu$m; a $d_{50sedi}$ of from about 1.5 $\mu$m to about 3.5 $\mu$m, for example, from about 2.0 $\mu$m to about 3.0 $\mu$m, or from about 2.1 $\mu$m to about 2.7 $\mu$m, or from about 2.3 $\mu$m to about 2.5 $\mu$m, for example, about 2.4 $\mu$m; and a lamellarity index of from about 3.0 to about 5.0, for example, from about 3.2 to about 4.4, or from about 3.5 to about 4.1, for example, of about 3.8, wherein the ratio of lamellarity index to BET specific surface area is from about 0.45 $g/m^2$ to about 0.55 $g/m^2$, for example from about 0.47 to about 0.53 $g/m^2$, for example, of about 0.5 $g/m^2$ (e.g. about 0.50 $g/m^2$).

In certain embodiments, the talc particulate has: a specific surface area, BET, of from about 5.0 $m^2/g$ to about 7.0 $m^2/g$, for example, from about 5.5 $m^2/g$ to about 6.5 $m^2/g$, or from about 5.6 $m^2/g$ to about 6.2 $m^2/g$, for example, of about 5.9 $m^2/g$; a $d_{50laser}$ of from about from about 11.0 $\mu$m to about 13.0 $\mu$m, for example, from about from about 11.5 $\mu$m to about 12.5 $\mu$m, or from about 11.6 $\mu$m to about 12.1 $\mu$m, for example, of about 11.9 $\mu$m; a $d_{50sedi}$ of from about 2.0 $\mu$m to about 4.0 $\mu$m, for example, from about 2.5 $\mu$m to about 3.1 $\mu$m, or from about 2.6 $\mu$m to about 3.0 $\mu$m, for example, of about 2.8 $\mu$m; and a lamellarity index of from about 2.5 to about 4.0, for example, from about 2.9 to about 3.7, or from about 3.0 to about 3.6, for example, about 3.3, wherein the ratio of lamellarity index to BET specific surface area is from about 0.5 $g/m^2$ (e.g. from about 0.50 $g/m^2$) to about 0.6 $g/m^2$ (e.g. to about 0.60 $g/m^2$), for example, from about 0.52 $g/m^2$ to about 0.58 $g/m^2$, for example, of about 0.56 $g/m^2$.

In certain embodiments, the talc particulate has: a specific surface area, BET, of from about 3.0 $m^2/g$ to about 5.0 $m^2/g$, for example, from about 3.5 $m^2/g$ to about 4.5 $m^2/g$, or from about 4.0 $m^2/g$ to about 4.5 $m^2/g$, for example, of about 4.2 $m^2/g$; a $d_{50laser}$ of from about from about 12.0 $\mu$m to about 14.0 $\mu$m, for example, from about from about 12.5 $\mu$m to about 13.5 $\mu$m, or from about 12.5 $\mu$m to about 13.1 $\mu$m, for example, of about 12.8 $\mu$m; a $d_{50sedi}$ of from about 2.5 $\mu$m to about 4.5 $\mu$m, for example, from about 3.0 $\mu$m to about 4.0 $\mu$m, or from about 3.3 $\mu$m to about 3.9 $\mu$m, for example, about 3.6 $\mu$m; and a lamellarity index of from about 1.5 to about 3.5, for example, from about 2.0 to about 3.2, or from about 2.3 to about 2.9, for example, of about 2.6, wherein the talc particulate has a ratio of lamellarity index to BET specific surface area of from about 0.55 $g/m^2$ to about 0.7 $g/m^2$ (e.g. to about 0.70 $g/m^2$), for example, from about 0.59 $g/m^2$ to about 0.65 $g/m^2$, or from about 0.60 $g/m^2$ to about 0.64 $g/m^2$, for example, of about 0.62 $g/m^2$.

In certain embodiments, the talc particulate has: a specific surface area, BET, of from about 1.5 $m^2/g$ to about 3.5 $m^2/g$, for example, from about 2.0 $m^2/g$ to about 3.0 $m^2/g$, or from about 2.3 $m^2/g$ to about 2.9 $m^2/g$, for example, of about 2.6 $m^2/g$; a $d_{50laser}$ of from about from about 13.0 $\mu$m to about 15.0 $\mu$m, for example, from about from about 14.0 $\mu$m to about 15.0 $\mu$m, or from about 14.0 $\mu$m to about 14.6 $\mu$m, for example, of about 14.3 $\mu$m; a $d_{50sedi}$ of from about 4.0 $\mu$m to about 7.0 $\mu$m, for example, from about 4.8 $\mu$m to about 5.8 $\mu$m, or from about 5.0 $\mu$m to about 5.6 $\mu$m, for example, of about 5.3 $\mu$m; and a lamellarity index of from about 0.5 to about 2.5, for example, from about 1.0 to about 2.5, or from about 1.5 to about 2.0, or from about 1.6 to about 2.0, for example, of about 1.7, wherein the ratio of lamellarity index to BET specific surface area is from about 0.6 g/m$^2$ (e.g. from about 0.60 g/m$^2$) to about 0.7 g/m$^2$ (e.g. to about 0.70 g/m$^2$), for example, from about 0.62 g/m$^2$ to about 0.68 g/m$^2$, for example, of about 0.65 g/m$^2$.

It may be that no less than about 10 wt. %, for example, or no less than about 15 wt. %, or no less than about 20 wt. %, or no less than about 30 wt. %, or no less than about 35 wt. %, or no less than about 40 wt. %, of the talc particulate has a particle size, by sedigraph, equal to or smaller than about 2.0 $\mu$m. It may be that no greater than about 50 wt. %, for example, no greater than about 48 wt. %, or no greater than about 45 wt. %, or no greater than about 40 wt. %, or no greater than about 35 wt. %, or no greater than about 30 wt. %, or no greater than about 25 wt. %, of the talc particulate has a particle size, by sedigraph, equal to or smaller than about 2.0 $\mu$m. It may be that from about 10 wt. % to about 50 wt. %, for example, from about 15 wt. % to about 50 wt. %, or from about 20 wt. % to about 50 wt. %, or from about 30 wt. % to about 50 wt. %, or from about 35 wt. % to about 50 wt. %, or from about 40 wt. % to about 50 wt. %, or from about 20 wt. % to about 48 wt. %, or from about 30 wt. % to about 48 wt. %, or from about 35 wt. % to about 48 wt. %, or from about 40 wt. % to about 48 wt. %, or from about 20 wt. % to about 45 wt. %, or from about 30 wt. % to about 45 wt. %, or from about 35 wt. % to about 45 wt. %, or from about 40 wt. % to about 45 wt. %, or from about 20 wt. % to about 40 wt. %, or from about 30 wt. % to about 40 wt. %, or from about 35 wt. % to about 40 wt. %, or from about 20 wt. % to about 35 wt. %, or from about 30 wt. % to about 35 wt. %, or from about 10 wt.% to about 30 wt. %, or from about 15 wt. % to about 30 wt. %, or from about 20 wt. % to about 30 wt. %, or from about 10 wt. % to about 25 wt. %, or from about 15 wt. % to about 25 wt. %, or from about 20 wt. % to about 25 wt. %, of the talc particulate has a particle size, by sedigraph, equal to or smaller than about 2.0 $\mu$m.

The talc particulate may have a shape factor of at least about 40, for example, at least about 50, or at least about 60, or at least about 70, or at least about 80, or at least about 90. The talc particulate may have a shape factor no greater than about 120, for example, no greater than about 110, or no greater than about 100, or no greater than about 95, or no greater than about 90, or no greater than about 80, or no greater than about 70, or no greater than about 60, or no greater than about 50. The talc particulate may have a shape factor from about 40 to about 120, for example, from about 50 to about 120, or from about 60 to about 120, or from about 70 to about 120, or from about 80 to about 120, or from about 90 to about 120, or from about 40 to about 110, or from about 50 to about 110, or from about 60 to about 110, or from about 70 to about 110, or from about 80 to about 110, or from about 90 to about 110, or from about 40 to about 100, or from about 50 to about 100, or from about 60 to about 100, or from about 70 to about 100, or from about 80 to about 100, or from about 90 to about 100, or from about 40 to about 90, or from about 50 to about 90, or from about 60 to about 90, or from about 70 to about 90, or from about 80 to about 90, or from about 40 to about 80, or from about 50 to about 80, or from about 60 to about 80, or from about 70 to about 80, or from about 40 to about 70, or from about 50 to about 70, or from about 60 to about 70, or from about 40 to about 60, or from about 50 to about 60, or from about 40 to about 50.

In certain embodiments, the talc particulate has: a specific surface area, BET, of from about 6.0 m$^2$/g to about 9.0 m$^2$/g, for example, from about 7.0 m$^2$/g to about 8.0 m$^2$/g, or from about 7.3 m$^2$/g to about 7.9 m$^2$/g, for example, of about 7.6 m$^2$/g; a d$_{50laser}$ of from about from about 10.5 $\mu$m to about 13.0 $\mu$m, for example, from about from about 11.0 $\mu$m to about 12.0 $\mu$m, or from about 11.2 $\mu$m to about 11. 7 $\mu$m, for example, of about 11.4 $\mu$m; a d$_{50sedi}$ of from about 1.5 $\mu$m to about 3.5 $\mu$m, for example, from about 2.0 $\mu$m to about 3.0 $\mu$m, or from about 2.1 $\mu$m to about 2.7 $\mu$m, or from about 2.3 $\mu$m to about 2.5 $\mu$m, for example, of about 2.4 $\mu$m; a lamellarity index of from about 3.0 to about 5.0, for example, from about 3.2 to about 4.4, or from about 3.5 to about 4.1, for example, of about 3.8, wherein the ratio of lamellarity index to BET specific surface area is from about 0.45 g/m$^2$ to about 0.55 g/m$^2$, for example, from about 0.47 to about 0.53, for example, of about 0.5 g/m$^2$ (e.g. about 0.50 g/m$^2$); and a shape factor from about 70 to about 120, for example, from about 80 to about 100, or from about 90 to about 100; wherein from about 30 wt. % to about 50 wt. %, for example, from about 40 wt. % to about 50 wt. %, or from about 40 wt. % to about 45 wt. %, of the talc particulate has a particle size, by sedigraph, equal to or smaller than about 2.0 $\mu$m.

In certain embodiments, the talc particulate has: a specific surface area, BET, of from about 5.0 m$^2$/g to about 7.0 m$^2$/g, for example, from about 5.5 m$^2$/g to about 6.5 m$^2$/g, or from about 5.6 m$^2$/g to about 6.2 m$^2$/g, for example, of about 5.9 m$^2$/g; a d$_{50laser}$ of from about from about 11.0 $\mu$m to about 13.0 $\mu$m, for example, from about from about 11.5 $\mu$m to about 12.5 $\mu$m, or from about 11.6 $\mu$m to about 12.1 $\mu$m, for example, of about 11.9 $\mu$m; a d$_{50sedi}$ of from about 2.0 $\mu$m to about 4.0 $\mu$m, for example, from about 2.5 $\mu$m to about 3.1 $\mu$m, or from about 2.6 $\mu$m to about 3.0 $\mu$m, for example, of about 2.8 $\mu$m; a lamellarity index of from about 2.5 to about 4.0, for example, from about 2.9 to about 3.7, or from about 3.0 to about 3.6, for example, of about 3.3, wherein the ratio of lamellarity index to BET specific surface area is from about 0.5 g/m$^2$ (e.g. from about 0.50 g/m$^2$) to about 0.6 g/m$^2$ (e.g. to about 0.60 g/m$^2$), for example, from about 0.52 g/m$^2$ to about 0.58 g/m$^2$, for example, of about 0.56 g/m$^2$; and a shape factor from about 70 to about 100, for example, from about 80 to about 100, or from about 80 to about 90; wherein from about 30 wt. % to about 50 wt. %, for example, from about 30 wt. % to about 40 wt. %, or from about 35 wt. % to about 40 wt. %, of the talc particulate has a particle size, by sedigraph, equal to or less than about 2.0 $\mu$m.

In certain embodiments, the talc particulate has: a specific surface area, BET, of from about 3.0 m$^2$/g to about

5.0 m$^2$/g, for example, from about 3.5 m$^2$/g to about 4.5 m$^2$/g, or from about 4.0 m$^2$/g to about 4.5 m$^2$/g, for example, of about 4.2 m$^2$/g; a d$_{50laser}$ of from about from about 12.0 $\mu$m to about 14.0 $\mu$m, for example, from about from about 12.5 $\mu$m to about 13.5 $\mu$m, or from about 12.5 $\mu$m to about 13.1 $\mu$m, for example, of about 12.8 $\mu$m; a d$_{50sedi}$ of from about 2.5 $\mu$m to about 4.5 $\mu$m, for example, from about 3.0 $\mu$m to about 4.0 $\mu$m, or from about 3.3 $\mu$m to about 3.9 $\mu$m, for example, of about 3.6 $\mu$m; a lamellarity index of from about 1.5 to about 3.5, for example, from about 2.0 to about 3.2, or from about 2.3 to about 2.9, for example, about 2.6, wherein the talc particulate has a ratio of lamellarity index to BET specific surface area of from about 0.55 g/m$^2$ to about 0.7 g/m$^2$ (e.g. to about 0.70 g/m$^2$), for example, from about 0.59 g/m$^2$ to about 0.65 g/m$^2$, or from about 0.60 g/m$^2$ to about 0.64 g/m$^2$, for example, of about 0.62 g/m$^2$; and a shape factor from about 60 to about 90, for example, from about 70 to about 90, or from about 70 to about 80; wherein from about 20 wt. % to about 40 wt. %, for example, from about 30 wt. % to about 40 wt. %, or from about 30 wt. % to about 35 wt. %, of the talc particulate has a particle size, by sedigraph, equal to or less than about 2.0 $\mu$m.

In certain embodiments, the talc particulate has: a specific surface area, BET, of from about 1.5 m$^2$/g to about 3.5 m$^2$/g, for example, from about 2.0 m$^2$/g to about 3.0 m$^2$/g, or from about 2.3 m$^2$/g to about 2.9 m$^2$/g, for example, of about 2.6 m$^2$/g; a d$_{50laser}$ of from about from about 13.0 $\mu$m to about 15.0 $\mu$m, for example, from about from about 14.0 $\mu$m to about 15.0 $\mu$m, or from about 14.0 $\mu$m to about 14.6 $\mu$m, for example, of about 14.3 $\mu$m; a d$_{50sedi}$ of from about 4.0 $\mu$m to about 7.0 $\mu$m, for example, from about 4.8 $\mu$m to about 5.8 $\mu$m, or from about 5.0 $\mu$m to about 5.6 $\mu$m, for example, of about 5.3 $\mu$m; a lamellarity index of from about 0.5 to about 2.5, for example, from about 1.0 to about 2.5, or from about 1.5 to about 2.0, for example, of about 1.7, wherein the ratio of lamellarity index to BET specific surface area is from about 0.6 g/m$^2$ (e.g. from about 0.60 g/m$^2$) to about 0.7 g/m$^2$ (e.g. to about 0.70 g/m$^2$), for example, from about 0.62 g/m$^2$ to about 0.68 g/m$^2$, for example, of about 0.65 g/m$^2$; and a shape factor from about 40 to about 60, for example, from about 40 to about 50; wherein no less than about 15 wt. %, for example, from about 15 wt. % to about 30 wt. %, or from about 15 wt. % to about 25 wt. %, of the talc particulate has a particle size, by sedigraph, equal to or less than about 2.0 $\mu$m.

The talc particulate may, for example, be macrocrystalline talc (*i.e.* not microcrystalline talc). The crystalline structure of talc (e.g., microcrystalline or macrocrystalline) may be generally described in relation to a "morphology index" ("M" or "MI"), as described in H. J. Holland and M. J. Murtagh, "An XRD Morphology Index for Tales: The Effect of Particle Size and Morphology on the Specific Surface Area," Advances in X-ray Analysis, Vol. 42, pp. 421-428 (2000) and WO 2016/007363 A1, the contents of which are incorporated herein by reference. For example, talcs having a relatively high MI may be considered "platy" or "lamellar" talcs and generally may have a macrocrystalline structure, whereas talcs having a relatively lower MI are less platy and may have a microcrystalline structure. As used herein, the term "platy" refers to a talc composition having an MI greater than or equal to about 0.6. According to some embodiments, the morphology index of the talc particulate may be greater than or equal to 0.7, greater than or equal to 0.75, greater than or equal to 0.8, greater than or equal to 0.85, or greater than or equal to 0.9.

*Slurry Composition*

The talc particulate may be provided in the form of a slurry composition.

It will appreciated that a slurry is a suspension of solids (e.g. the talc particulate, and optionally one or more other solids) in liquid. A slurry may be used to transport the solids (e.g. the talc particulate), for example, when coating a paper product.

The slurry composition may comprise at least about 50 % by weight, for example, at least about 51 % by weight, or at least about 52 % by weight, or at least about 53 % by weight, or at least about 54 % by weight, or at least about 55 % by weight, or at least about 56 % by weight, or at least about 57 % by weight, or at least about 58 % by weight, or at least about 59 % by weight, or at least about 60 % by weight, of the talc particulate. The slurry composition may comprise no greater than about 70 % by weight, for example, no greater than about 65 % by weight, or no greater than about 60 % by weight, of the talc particulate. The slurry composition may comprise from about 50 % by weight to about 70 % by weight, or from about 51 % by weight to about 70 % by weight, or from about 52 % by weight to about 70 % by weight, or from about 53 % by weight to about 70 % by weight, or from about 54 % by weight to about 70 % by weight, or from about 55 % by weight to about 70 % by weight, or from about 56 % by weight to about 70 % by weight, or from about 57 % by weight to about 70 % by weight, or from about 58 % by weight to about 70 % by weight, or from about 59 % by weight to about 70 % by weight, or from about 60 % by weight to about 70 % by weight, or from about 50 % by weight to about 65 % by weight, or from about 51 % by weight to about 65 % by weight, or from about 52 % by weight to about 65 % by weight, or from about 53 % by weight to about 65 % by weight, or from about 54 % by weight to about 65 % by weight, or from about 55 % by weight to about 65 % by weight, or from about 56 % by weight to about 65 % by weight, or from about 57 % by weight to about 65 % by weight, or from about 58 % by weight to about 65 % by weight, or from about 59 % by weight to about 65 % by weight, or from about 60 % by weight to about 65 % by weight, or from about 50 % by weight to about 60 % by weight, or from about 51 % by weight to about 60 % by weight, or from about 52 % by weight to about 60 % by weight, or from about 53 % by weight to about 60 % by weight, or from about 54 % by weight to about 60 % by weight, or from about 55 % by weight to about 60 % by weight, or from about 56 % by weight to about 60 % by weight, or from about 57 % by weight to about 60 % by weight, or from about 58 % by weight to about 60 % by weight, or from about 59 % by weight to about 60 % by weight, of the talc particulate.

The slurry composition may comprise no less than about 30 wt. %, for example, no less than about 35 wt. %, or no less than about 40 wt. %, or no less than about 45 wt. %, or no less than about 50 wt. %, liquid. The slurry composition may comprise no greater than about 50 wt. %, for example, no greater than about 45 wt. %, or no greater than about 40 wt. %, or no greater than about 35 wt. %, or no greater than about 30 wt. %, liquid. The slurry composition may comprise from about 30 wt. % to about 50 wt. %, for example, from about 35 wt. % to about 50 wt. %, or from about 40 wt. % to about 50 wt. %, or from about 45 wt. % to about 50 wt. %, or from about 30 wt. % to about 45 wt. %, or from about 35 wt. % to about 45 wt. %, or from about 30 wt. % to about 40 wt. %, or from about 35 wt. % to about 40 wt. %, or from about 30 wt. % to about 35 wt. %, liquid.

The slurry composition may be an aqueous slurry composition. The slurry composition may comprise water. For example, the liquid may comprise (e.g. consist substantially of, or consist of, i.e. be) water. For example, the slurry composition may comprise no less than about 30 wt. %, for example, no less than about 35 wt. %, or no less than about 40 wt. %, or no less than about 45 wt. %, or no less than about 50 wt. %, water. The slurry composition may comprise no greater than about 50 wt. %, for example, no greater than about 45 wt. %, or no greater than about 40 wt. %, or no greater than about 35 wt. %, or no greater than about 30 wt. %, water. The slurry composition may comprise from about 30 wt. % to about 50 wt. %, for example, from about 35 wt. % to about 50 wt. %, or from about 40 wt. % to about 50 wt. %, or from about 45 wt. % to about 50 wt. %, or from about 30 wt. % to about 45 wt. %, or from about 35 wt. % to about 45 wt. %, or from about 30 wt. % to about 40 wt. %, or from about 35 wt. % to about 40 wt. %, or from about 30 wt. % to about 35 wt. %, water.

The slurry composition may comprise one or more additives, such as one or more dispersants, thickeners, emulsifiers, or viscosity modifiers, or combinations thereof. The dispersants, thickeners, emulsifiers or viscosity modifiers may be polymers. For example, the slurry composition may comprise no less than about 0.1 wt. %, for example, no less than about 0.2 wt. %, or no less than about 0.5 wt. %, or no less than about 0.75 wt. %, of additives (e.g. dispersants, thickeners, emulsifiers, or viscosity modifiers, or combinations thereof). The slurry composition may comprise no more than about 2.5 wt. %, for example, no more than about 1.5 wt. %, or no more than about 1.0 wt. %, or no more than about 0.75 wt. %, or no more than about 0.5 wt. %, of additives (e.g. dispersants, thickeners, emulsifiers, or viscosity modifiers, or combinations thereof). The slurry composition may comprise from about 0.1 wt. % to about 2.5 wt. %, for example, from about 0.1 wt. % to about 1.5 wt. %, or from about 0.1 wt. % to about 1.0 wt. %, or from about 0.1 wt. % to about 0.75 wt. %, or from about 0.1 wt. % to about 0.5 wt. %, or from about 0.2 wt. % to about 2.5 wt. %, or from about 0.2 wt. % to about 1.5 wt. %, or from about 0.2 wt. % to about 1.0 wt. %, or from about 0.2 wt. % to about 0.75 wt. %, or from about 0.2 wt. % to about 0.5 wt. %, or from about 0.5 w. % to about 2.5 wt. %, or from about 0.5 wt. % to about 1.5 wt. %, or from about 0.5 wt. % to about 1.0 wt. %, or from about 0.5 wt. % to about 0.75 wt. %, of additives (e.g. dispersants, thickeners, emulsifiers, or viscosity modifiers, or combinations thereof).

In some embodiments, the slurry composition comprises one or more dispersants. The one or more dispersants may be one or more non-ionic dispersants. The one or more dispersants may be one or more polyacrylates and/or one or more polycarboxylates. The one or more dispersants may be one or more non-ionic dispersants formed by polymerizing monomers selected from acrylic acid and/or methacrylic acid monomers. The one or more dispersants may comprise an acrylic copolymer dispersant.

The slurry composition may comprise no less than about 0.1 wt. %, for example, no less than about 0.2 wt. %, or no less than about 0.5 wt. %, or no less than about 0.75 wt. %, of dispersants. The slurry composition may comprise no more than about 2.5 wt. %, for example, no more than about 1.5 wt. %, or no more than about 1.0 wt. %, or no more than about 0.75 wt. %, or no more than about 0.5 wt. %, of dispersants. The slurry composition may comprise from about 0.1 wt. % to about 2.5 wt. %, for example, from about 0.1 wt. % to about 1.5 wt. %, or from about 0.1 wt. % to about 1.0 wt. %, or from about 0.1 wt. % to about 0.75 wt. %, or from about 0.1 wt. % to about 0.5 wt. %, or from about 0.2 wt. % to about 2.5 wt. %, or from about 0.2 wt. % to about 1.5 wt. %, or from about 0.2 wt. % to about 1.0 wt. %, or from about 0.2 wt. % to about 0.75 wt. %, or from about 0.2 wt. % to about 0.5 wt. %, or from about 0.5 w. % to about 2.5 wt. %, or from about 0.5 wt. % to about 1.5 wt. %, or from about 0.5 wt. % to about 1.0 wt. %, or from about 0.5 wt. % to about 0.75 wt. %, of dispersants.

The person skilled in the art will appreciate that the amount of dispersants used in the slurry composition can be tailored to the solids content of the slurry. For example, a solids content in the range from about 50 wt. % to about 58 wt. % may be achieved using from about 0.5 wt. % to about 1.8 wt. % of dispersants. A solids content in the range from about 50 wt. % to about 60 wt. % may be achieved using from about 0.3 wt. % to about 2 wt. % dispersant.

The slurry composition may comprise one or more pH modifiers. The one or more pH modifiers may comprise (e.g. consist of) one or more alkali salts such as sodium hydroxide. For example, the slurry composition may comprise no less than about 0.1 wt. %, for example, no less than about 0.5 wt. %, pH modifiers (e.g. alkali salts, for example, sodium hydroxide). The slurry composition may comprise no more than about 1.5 wt. %, for example, no more than about 1.0 wt. %, or no more than about 0.5 wt. %, pH modifiers (e.g. alkali salts, for example, sodium hydroxide). The slurry composition may comprise from about 0.1 wt. % to about 1.5 wt. %, for example, from about 0.5 wt. % to about 1.5 wt. %, or from about 0.1 wt. % to about 1.0 wt. %, or from about 0.5 wt. % to about 1.0 wt. %, or from about 0.1 wt. % to about 0.5 wt. %, pH modifiers (e.g. alkali salts, for example, sodium hydroxide).

The slurry composition may be alkaline. The slurry composition may have a pH of no less than about 7.5, for example, no less than about 8.0, or no less than about 8.5, or no less than about 9.0. The slurry composition may have a pH of no greater than about 12.0, for example, no greater than about 11.0, or no greater than about 10.0. The slurry composition may have a pH of from about 7.5 to about 12.0, for example, from about 7.5 to about 11.0, or from about 7.5 to about 10.0, or from about 8.0 to about 12.0, or from about 8.0 to about 11.0, or from about 8.0 to about 10.0, or from about 8.5 to about 12.0, or from about 8.5 to about 11.0, or from about 8.5 to about 10.0, or from about 9.0 to about 12.0, or from about 9.0 to about 11.0, or from about 9.0 to about 10.0.

In some embodiments, the slurry composition comprises: from about 0.1 wt. % to about 2.5 wt. %, for example, from about 0.1 wt. % to about 1.5 wt. %, or from about 0.1 wt. % to about 1.0 wt. %, or from about 0.1 wt. % to about 0.75 wt. %, or from about 0.1 wt. % to about 0.5 wt. %, or from about 0.2 wt. % to about 2.5 wt. %, or from about 0.2 wt. % to about 1.5 wt. %, or from about 0.2 wt. % to about 1.0 wt. %, or from about 0.2 wt. % to about 0.75 wt. %, or from about 0.2 wt. % to about 0.5 wt. %, or from about 0.5 w. % to about 2.5 wt. %, or from about 0.5 wt. % to about 1.5 wt. %, or from about 0.5 wt. % to about 1.0 wt. %, or from about 0.5 wt. % to about 0.75 wt. %, of dispersants; and from about 0.1 wt. % to about 1.5 wt. %, for example, from about 0.5 wt. % to about 1.5 wt. %, or from about 0.1 wt. % to about 1.0 wt. %, or from about 0.5 wt. % to about 1.0 wt. %, or from about 0.1 wt. % to about 0.5 wt. %, pH modifiers (e.g. alkali salts, for example, sodium hydroxide).

The slurry composition may comprise: from about 50 % by weight to about 70 % by weight, or from about 51 % by weight to about 70 % by weight, or from about 52 % by weight to about 70 % by weight, or from about 53 % by weight to about 70 % by weight, or from about 54 % by weight to about 70 % by weight, or from about 55 % by weight to about 70 % by weight, or from about 56 % by weight to about 70 % by weight, or from about 57 % by weight to about 70 % by weight, or from about 58 % by weight to about 70 % by weight, or from about 59 % by weight to about 70 % by weight, or from about 60 % by weight to about 70 % by weight, or from about 50 % by weight to about 65 % by weight, or from about 51 % by weight to about 65 % by weight, or from about 52 % by weight to about 65 % by weight, or from about 53 % by weight to about 65 % by weight, or from about 54 % by weight to about 65 % by weight, or from about 55 % by weight to about 65 % by weight, or from about 56 % by weight to about 65 % by weight, or from about 57 % by weight to about 65 % by weight, or from about 58 % by weight to about 65 % by weight, or from about 59 % by weight to about 65 % by weight, or from about 60 % by weight to about 65 % by weight, or from about 50 % by weight to about 60 % by weight, or from about 51 % by weight to about 60 % by weight, or from about 52 % by weight to about 60 % by weight, or from about 53 % by weight to about 60 % by weight, or from about 54 % by weight to about 60 % by weight, or from about 55 % by weight to about 60 % by weight, or from about 56 % by weight to about 60 % by weight, or from about 57 % by weight to about 60 % by weight, or from about 58 % by weight to about 60 % by weight, or from about 59 % by weight to about 60 % by weight; from about 30 wt. % to about 50 wt. %, for example, from about 35 wt. % to about 50 wt. %, or from about 40 wt. % to about 50 wt. %, or from about 45 wt. % to about 50 wt. %, or from about 30 wt. % to about 45 wt. %, or from about 35 wt. % to about 45 wt. %, or from about 30 wt. % to about 40 wt. %, or from about 35 wt. % to about 40 wt. %, or from about 30 wt. % to about 35 wt. %, liquid (e.g. water); optionally from about 0.1 wt. % to about 2.5 wt. %, for example, from about 0.1 wt. % to about 1.5 wt. %, or from about 0.1 wt. % to about 1.0 wt. %, or from about 0.1 wt. % to about 0.75 wt. %, or from about 0.1 wt. % to about 0.5 wt. %, or from about 0.2 wt. % to about 2.5 wt. %, or from about 0.2 wt. % to about 1.5 wt. %, or from about 0.2 wt. % to about 1.0 wt. %, or from about 0.2 wt. % to about 0.75 wt. %, or from about 0.2 wt. % to about 0.5 wt. %, or from about 0.5 w. % to about 2.5 wt. %, or from about 0.5 wt. % to about 1.5 wt. %, or from about 0.5 wt. % to about 1.0 wt. %, or from about 0.5 wt. % to about 0.75 wt. %, of additives (e.g. dispersants, thickeners, emulsifiers, or viscosity modifiers, or combinations thereof); and optionally from about 0.5 wt. % to about 1.5 wt. %, or from about 0.1 wt. % to about 1.0 wt. %, or from about 0.5 wt. % to about 1.0 wt. %, or from about 0.1 wt. % to about 0.5 wt. %, pH modifiers (e.g. alkali salts, for example, sodium hydroxide).

The slurry composition may comprise: from about 50 % by weight to about 70 % by weight, or from about 51 % by weight to about 70 % by weight, or from about 52 % by weight to about 70 % by weight, or from about 53 % by weight to about 70 % by weight, or from about 54 % by weight to about 70 % by weight, or from about 55 % by weight to about 70 % by weight, or from about 56 % by weight to about 70 % by weight, or from about 57 % by weight to about 70 % by weight, or from about 58 % by weight to about 70 % by weight, or from about 59 % by weight to about 70 % by weight, or from about 60 % by weight to about 70 % by weight, or from about 50 % by weight to about 65 % by weight, or from about 51 % by weight to about 65 % by weight, or from about 52 % by weight to about 65 % by weight, or from about 53 % by weight to about 65 % by weight, or from about 54 % by weight to about 65 % by weight, or from about 55 % by weight to about 65 % by weight, or from about 56 % by weight to about 65 % by weight, or from about 57 % by weight to about 65 % by weight, or from about 58 % by weight to about 65 % by weight, or from about 59 % by weight to about 65 % by weight, or from about 60 % by weight to about 65 % by weight, or from about 50 % by weight to about 60 % by weight, or from about 51 % by weight to about 60 % by weight, or from about 52 % by weight to about 60 % by weight, or from about 53 % by weight to about 60 % by weight, or from about 54 % by weight to about 60 % by weight, or from about 55 % by weight to about 60 % by weight, or from about 56 % by weight to about 60 % by weight, or from about 57 % by weight to about 60 % by weight, or from about 58 % by weight to about 60 % by weight, or from about 59 % by weight to about 60 % by weight; from about 30 wt. % to about 50 wt. %, for example, from about 35 wt. % to about 50 wt. %, or from about 40 wt. % to about 50 wt. %, or from about 45 wt. % to about 50 wt. %, or from about 30 wt. % to about 45 wt. %, or from about 35 wt. % to about 45 wt. %, or from about 30 wt. % to about 40 wt. %, or from about 35 wt. % to about 40 wt. %, or from about 30 wt. % to about 35 wt. %, liquid (e.g. water); optionally from about 0.1 wt. % to about 2.5 wt. %, for example, from about 0.1 wt. % to about 1.5 wt. %, or from about 0.1 wt. % to about 1.0 wt. %, or from about 0.1 wt. % to about 0.75 wt. %, or from about 0.1 wt. % to about 0.5 wt. %, or from about 0.2 wt. % to about 2.5 wt. %, or from about 0.2 wt. % to about 1.5 wt. %, or from about 0.2 wt. % to about 1.0 wt. %, or from about 0.2 wt. % to about 0.75 wt. %, or from about 0.2 wt. % to about 0.5 wt. %, or from about 0.5 w. % to about 2.5 wt. %, or from about 0.5 wt. % to about 1.5 wt. %, or from about 0.5 wt. % to about 1.0 wt. %, or from about 0.5 wt. % to about 0.75 wt. %, of dispersants; and optionally from about 0.5 wt. % to about 1.5 wt. %, or from about 0.1 wt. % to about 1.0 wt. %, or from about 0.5 wt. % to about 1.0 wt. %, or from about 0.1 wt. % to about 0.5 wt. %, pH modifiers (e.g. alkali salts, for example, sodium hydroxide).

*Barrier Coating Formulation*

The talc particulate may be used in a coating formulation. The coating formulation may comprise the talc particulate and at least one binder. The coating formulation may be a barrier coating formulation (i.e. a formulation for a barrier coating), for example, a barrier coating formulation (i.e. a formulation for a barrier coating) for a paper product.

The formulation for the barrier coating may comprise no less than about 20 wt. %, for example, no less than about 25 wt. %, or no less than about 30 wt. %, or no less than about 35 wt. %, or no less than about 40 wt. %, or no less than about 45 wt. %, or no less than about 50 wt. %, or no less than about 55 wt. %, or no less than about 60 wt. %, or no less than about 65 wt. %, of the talc particulate, based on the total solids content of the formulation. The formulation for the barrier coating may comprise no greater than about 70 wt. %, for example, no greater than about 65 wt. %, or no greater than about 60 wt. %, or no greater than about 55 wt. %, of the talc particulate, based on the total solids content of the formulation. The formulation for the barrier coating may comprise from about 20 wt. % to about 70 wt. %, for example, from about 25 wt. % to about 70 wt. %, or from about 30 wt. % to about 70 wt. %, or from about 35 wt. % to about 70 wt. %, or from about 40 wt. % to about 70 wt. %, or from about 45 wt. % to about 70 wt. %, or from about 50 wt. % to about 70 wt. %, or from about 55 wt. % to about 70 wt. %, or from about 60 wt. % to about 70 wt. %, or from about 65 wt. % to about 70 wt. %, or from about 20 wt. % to about 65 wt. %, or from about 25 wt. % to about 65 wt. %, or from about 30 wt. % to about 65 wt. %, or from about 35 wt. % to about 65 wt. %, or from about 40 wt. % to about 65 wt. %, or from about 45 wt. % to about 65 wt. %, or from about 50 wt. % to about 65 wt. %, or from about 55 wt. % to about 65 wt. %, or from about 60 wt. % to about 65 wt. %, or from about 20 wt. % to about 60 wt. %, or from about 25 wt. % to about 60 wt. %, or from about 30 wt. % to about 60 wt. %, or from about 35 wt. % to about 60 wt. %, or from about 40 wt. % to about 60 wt. %, or from about 45 wt. % to about 60 wt. %, or from about 50 wt. % to about 60 wt. %, or from about 55 wt. % to about 60 wt. %, or from about 20 wt. % to about 55 wt. %, or from about 25 wt. % to about 55 wt. %, or from about 30 wt. % to about 55 wt. %, or from about 35 wt. % to about 55 wt. %, or from about 40 wt. % to about 55 wt. %, or from about 45 wt. % to about 55 wt. %, or from about 50 wt. % to about 55 wt. %, of the talc particulate, based on the total solids content of the formulation.

The binder may comprise or consist of a latex.

The term "latex" is used herein to mean a dispersion/suspension (e.g. aqueous dispersion/suspension) of one or more polymer(s). The polymers may, for example, be natural or synthetic. Therefore, the term "latex binder" means any composition comprising, consisting essentially of or consisting of one or more polymers, which is capable of functioning as a binder in a coating composition, for example a barrier coating composition, which may be suitable for coating a paper product.

The latex binder may, for example, be natural rubber latex obtained from, for example, rubber trees. The latex binder may, for example, be a synthetic latex. The latex binder may, for example, be a styrene polymer, for example copolymers including styrene monomers. For example, the latex binder may be a copolymer comprising, consisting essentially of or consisting of alkene monomers (e.g. ethylene, propylene, butylene, butadiene) and styrene monomers. For example, the latex binder may be styrene butadiene. The latex binder may, for example, be acrylic polymer latex, polyvinyl acetate latex, polyvinyl alcohol, ethylene vinyl alcohol, styrene acrylic copolymer latex, ethylene acrylic acid copolymer latex, polyurethane, polyester, polyethyleneacrylate dispersions and combinations thereof. The binder may, for example, be a biopolymer dispersion (i.e., a dispersion of a biopolymer (biopolymers are polymers produced from natural sources either chemically synthesized from a biological material or entirely biosynthesized by living organisms)), for example, comprising starch, chitin, chitosan, polybutylene succinate (PBS), a polyhydroxyalkanoate (e.g., PHA and/or PHB), a biopolymer polyester, and/or polyethylene furanoate (PEF). The barrier coating may comprise, for example, ethylene acrylic acid (EAA) copolymer, styrene butadiene (SBR) copolymer or styrene acrylic (SA) copolymer.

The formulation for the barrier coating may comprise no less than about 30 wt. %, for example, no less than about 35 wt. %, or no less than about 40 wt. %, or no less than about 45 wt. %, of binder, based on the total solids content of the formulation. The formulation for the barrier coating may comprise no more than about 80 wt. %, for example, no more than about 75 wt. %, or no more than about 70 wt. %, or no more than about 65 wt. %, or no more than about 60 wt. %, or no more than about 55 wt. %, or no more than about 50 wt. %, or no more than about 45 wt. %, or no more than about 40 wt. %, or no more than about 35 wt. %, of binder, based on the total solids content of the formulation. The formulation for the barrier coating may comprise from about 80 wt. % to about 30 wt. %, for example, from about 80 wt. % to about 35 wt. %, or from about 80 wt. % to about 40 wt. %, or from about 80 wt. % to about 45 wt. %, or from about 75 wt. % to about 30 wt. %, or from about 75 wt. % to about 35 wt. %, or from about 75 wt. % to about 40 wt. %, or from about 70 wt. % to about 30 wt. %, or from about 65 wt. % to about 30 wt. %, or from about 60 wt. % to about 30 wt. %, or from about 55 wt. % to about 30 wt. %, or from about 50 wt. % to about 30 wt. %, or from about 45 wt. % to about 30 wt. %, or from about 35 wt. % to about 30 wt. %, or from about 70 wt. % to about 35 wt. %, or from about 65 wt. % to about 35 wt. %, or from about 60 wt. % to about 35 wt. %, or from about 55 wt. % to about 35 wt. %, or from about 50 wt. % to about 35 wt. %, or from about 45 wt. % to about 35 wt. %, or from about 70 wt. % to about 40 wt. %, or from about 65 wt. % to about 40 wt. %, or from about 60 wt. % to about 40 wt. %, or from about 55 wt. % to about 40 wt. %, or from about 50 wt. % to about 40 wt. %, or from about 45 wt. % to about 40 wt. %, or from about 70 wt. % to about 45 wt. %, or from about 65 wt. % to about 45 wt. %, or from about 60 wt. % to about 45 wt. %, or from about 55 wt. % to about 45 wt. %, or from about 50 wt. % to about 45 wt. %, of binder, based on the total solids content of the formulation.

The formulation for the barrier coating may comprise: from about 20 wt. % to about 70 wt. %, for example, from about 25 wt. % to about 70 wt. %, or from about 30 wt. % to about 70 wt. %, or from about 35 wt. % to about 70 wt. %, or from about 40 wt. % to about 70 wt. %, or from about 45 wt. % to about 70 wt. %, or from about 50 wt. % to about 70 wt. %, or from about 55 wt. % to about 70 wt. %, or from about 60 wt. % to about 70 wt. %, or from about 65 wt. % to about 70 wt. %, or from about 20 wt. % to about 65 wt. %, or from about 25 wt. % to about 65 wt. %, or from about 30 wt. % to about 65 wt. %, or from about 35 wt. % to about 65 wt. %, or from about 40 wt. % to about 65 wt. %, or from about 45 wt. % to about 65 wt. %, or from about 50 wt. % to about 65 wt. %, or from about 55 wt. % to about 65 wt. %, or from about 60 wt. % to about 65 wt. %, or from about 20 wt. % to about 60 wt. %, or from about 25 wt. % to about 60 wt. %, or from about 30 wt. % to about 60 wt. %, or from about 35 wt. % to about 60 wt. %, or from about 40 wt. % to about 60 wt. %, or from about 45 wt. % to about 60 wt. %, or from about 50 wt. % to about 60 wt. %, or from about 55 wt. % to about 60 wt. %, or from about 20 wt. % to about 55 wt. %, or from about 25 wt. % to about 55 wt. %, or from about 30 wt. % to about 55 wt. %, or from about 35 wt. % to about 55 wt. %, or from about 40 wt. % to about 55 wt. %, or from about 45 wt. % to about 55 wt. %, or from about 50 wt. % to about 55 wt. %, of the talc particulate, based on the total solids content of the formulation; and from about 80 wt. % to about 30 wt. %, for example, from about 75 wt. % to about 30 wt. %, or from about 70 wt. % to about 30 wt. %, from about 65 wt. % to about 30 wt. %, or from about 60 wt. % to about 30 wt. %, or from about 55 wt. % to about 30 wt. %, or from about 50 wt. % to about 30 wt. %, or from about 45 wt. % to about 30 wt. %, or from about 35 wt. % to about 30 wt. %, or from about 80 wt. % to about 35 wt. %, or from about 75 wt. % to about 35 wt. %, or from about 70 wt. % to about 35 wt. %, or from about 65 wt. % to about 35 wt. %, or from about 60 wt. % to about 35 wt. %, or from about 55 wt. % to about 35 wt. %, or from about 50 wt. % to about 35 wt. %, or from about 45 wt. % to about 35 wt. %, or from about 80 wt. % to about 40 wt. %, or from about 75 wt. % to about 40 wt. %, or from about 70 wt. % to about 40 wt. %, or from about 65 wt. % to about 40 wt. %, or from about 60 wt. % to about 40 wt. %, or from about 55 wt. % to about 40 wt. %, or from about 50 wt. % to about 40 wt. %, or from about 45 wt. % to about 40 wt. %, or from about 80 wt. % to about 45 wt. %, or from about 75 wt. % to about 45 wt. %, or from about 70 wt. % to about 45 wt. %, or from about 65 wt. % to about 45 wt. %, or from about 60 wt. % to about 45 wt. %, or from about 55 wt. % to about 45 wt. %, or from about 50 wt. % to about 45 wt. %, of binder, based on the total solids content of the formulation.

The formulation for the barrier coating may comprise water. The formulation for the barrier coating may comprise no less than about 40 wt. %, for example, no less than about 45 wt. %, or no less than about 50 wt. %, water, based on the total weight of the formulation. The formulation for the barrier coating may comprise no more than about 60 wt. %, for example, no more than about 55 wt. %, or no more than about 50 wt. %, water, based on the total weight of the formulation. The formulation for the barrier coating may comprise from about 40 wt. % to about 60 wt. %, for example, from about 45 wt. % to about 60 wt. %, or from about 50 wt. % to about 60 wt. %, or from about 40 wt. % to about 55 wt. %, or from about 45 wt. % to about 55 wt. %, or from about 50 wt. % to about 55 wt. %, or from about 40 wt. % to about 50 wt. %, water, based on the total weight of the formulation.

The formulation for the barrier coating may comprise one or more optional additional components, if desired. Such additional components, where present, may suitably be selected from known additives for coating compositions (e.g. paper coating compositions). Some of these optional additives may provide more than one function in the coating composition. Examples of known classes of optional additives are as follows:

(a) one or more cross linkers;
(b) one or more water retention aids;
(c) one or more viscosity modifiers or thickeners;
(d) one or more lubricity or calendering aids;
(e) one or more dispersants;
(f) one or more antifoamers or defoamers;
(g) one or more optical brightening agents (OBA) or fluorescent whitening agents (FWA);
(h) one or more dyes;
(i) one or more biocides or spoilage control agents;
(j) one or more levelling or evening aids;
(k) one or more grease or oil resistance agents;
(l) one or more surfactants; and/or
(m) one more binders.

Any of the above additives and additive types may be used alone or in a mixture with each other and with other additives, if desired. The pH of the coating composition may be controlled and/or modified. For example, the pH may be controlled and/or modified, e.g. increased by using hydroxide, for example sodium hydroxide.

For all of the above additives, the percentages by weight (based on the dry weight of inorganic particulate material (100%) present in the formulation) can vary as understood by those skilled in the art. Where the additive is present in a minimum amount, the minimum amount may be about 0.01% by weight based on the dry weight of the talc particulate material in the formulation. The maximum amount of any one or more of the above additives may, for example, be about 5.0% by weight based on the dry weight of the talc particulate material in the formulation. For example, the maximum amount may be about 3.0% or 2.0% by weight based on the dry weight of the talc particulate material in the formulation.

The formulation for the barrier coating made by a method comprising combining (e.g. mixing) at least one binder with the talc particulate.

The method may comprise, for example, combining (e.g. mixing) the at least one binder, the talc particulate and any other optional additives in appropriate amounts into an aqueous liquid to prepare a suspension of said components. The formulation for the barrier coating may suitably be prepared by conventional mixing techniques, as will be known in the art. The talc particulate may, for example, be provided in the form of the slurry composition (e.g. the aqueous slurry composition). The slurry composition may, for example, be prepared using a suitable mixer (e.g. at high shear), following which the slurry composition may be blended with a solution of the binder. The resulting mixture may be screened prior to use in coating.

*Method for making the talc particulate*

The talc particulate may be made by wet grinding an aqueous suspension of a talc feed material.
The talc feed material may be a macrocrystalline talc.
The talc feed material may be a pre-ground talc or a crude talc (i.e. talc which has not previously been ground).
The talc feed material may have a $d_{50}$ (by sedigraph for values of $d_{50}$ no greater than 50 $\mu$m and by sieving for values of $d_{50}$ greater than 50 $\mu$m) from about 7.5 $\mu$m to about 50 mm, for example, from about 7.5 $\mu$m to about 40 mm, or from about 7.5 $\mu$m to about 30 mm, or from about 7.5 $\mu$m to about 20 mm, or from about 7.5 $\mu$m to about 10 mm, or from about 7.5 $\mu$m to about 1 mm, or from about 7.5 $\mu$m to about 100 $\mu$m, or from about 7.5 $\mu$m to about 50 $\mu$m, or from about 7.5 $\mu$m to about 25 $\mu$m, or from about 7.5 $\mu$m to about 15 $\mu$m, or from about 10 $\mu$m to about 50 mm, or from about 10 $\mu$m to about 40 mm, or from about 10 $\mu$m to about 30 mm, or from about 10 $\mu$m to about 20 mm, or from about 10 $\mu$m to about 10 mm, or from about 10 $\mu$m to about 1 mm, or from about 10 $\mu$m to about 100 $\mu$m, or from about 10 $\mu$m to about 50 $\mu$m, or from about 10 $\mu$m to about 25 $\mu$m, or from about 10 $\mu$m to about 15 $\mu$m, or from about 50 $\mu$m to about 50 mm, or from about 50 $\mu$m to about 40 mm, or from about 50 $\mu$m to about 30 mm, or from about 50 $\mu$m to about 20 mm, or from about 50 $\mu$m to about 10 mm, or from about 50 $\mu$m to about 1 mm, or from about 50 $\mu$m to about 100 $\mu$m, or from about 100 $\mu$m to about 50 mm, or from about 100 $\mu$m to about 40 mm, or from about 100 $\mu$m to about 30 mm, or from about 100 $\mu$m to about 20 mm, or from about 100 $\mu$m to about 10 mm, or from about 100 $\mu$m to about 1 mm, or from about 1 mm to about 50 mm, or from about 1 mm to about 10 mm.

For example, it may be that the talc feed material is a pre-ground talc having a $d_{50}$ (by sedigraph for values of $d_{50}$ no greater than 50 $\mu$m and by sieving for values of $d_{50}$ greater than 50 $\mu$m) from about 7.5 $\mu$m to less than 1 mm, for example, from about 7.5 $\mu$m to about 100 $\mu$m, or from about 7.5 $\mu$m to about 50 $\mu$m, or from about 7.5 $\mu$m to about 25 $\mu$m, or from about 7.5 $\mu$m to about 15 $\mu$m, or from about 10 $\mu$m to about 100 $\mu$m, or from about 10 $\mu$m to about 50 $\mu$m, or from about 10 $\mu$m to about 25 $\mu$m, or from about 10 $\mu$m to about 15 $\mu$m, or from about 50 $\mu$m to about 100 $\mu$m. Alternatively, it may be that the talc feed material is a crude talc having a $d_{50}$ (by sedigraph for values of $d_{50}$ no greater

than 50 $\mu$m and by sieving for values of $d_{50}$ greater than 50 $\mu$m) from about 1 mm to about 50 mm, or from about 1 mm to about 40 mm, or from about 1 mm to about 30 mm, or from about 1 mm to about 20 mm, or from about 1 mm to about 10 mm.

In some embodiments, the talc has a $d_{50}$, by sedigraph, from about 7.5 $\mu$m to about 10 $\mu$m, for example, from about 8.0 $\mu$m to about 9.0 $\mu$m, for example, about 8.4 $\mu$m. The talc may have a $d_{90}$, by sedigraph, from about 17 $\mu$m to about 22 $\mu$m, for example, from about 19 $\mu$m to about 20 $\mu$m, for example, about 19.4 $\mu$m. The talc may have a $d_{10}$, by sedigraph, from about 1 $\mu$m to about 5 $\mu$m, for example, from about 2 $\mu$m to about 3 $\mu$m, for example, about 2.2 $\mu$m.

The wet grinding may be carried out under conditions suitable to obtain an aqueous slurry comprising the talc particulate according to the invention.

The wet grinding may be carried out in the presence of a dispersant (e.g., a surfactant). The dispersant may be a polymeric dispersant. The dispersant may comprise (e.g. be) one or more polyacrylates (i.e. polymers of acrylates such as methyl acrylate or methyl methacrylate, for example, polymethacrylate or poly(methyl methacrylate)) and/or one or more polycarboxylates (i.e. polymers of acrylic acid and/or copolymers of acrylic acid and maleic acid, for example, poly(acrylic acid)). In some examples, the dispersant comprises (e.g. is) a polyacrylate. In some examples, the dispersant comprises (e.g. is) a polycarboxylate. The aqueous suspension may comprise no less than about 0.1 wt. %, for example, no less than about 0.2 wt. %, or no less than about 0.5 wt. %, or no less than about 0.75 wt. %, of dispersant. The aqueous suspension may comprise no more than about 2.5 wt. %, for example, no more than about 1.5 wt. %, or no more than about 1.0 wt. %, or no more than about 0.75 wt. %, or no more than about 0.5 wt. %, of dispersant. The aqueous suspension may comprise from about 0.1 wt. % to about 2.5 wt. %, for example, from about 0.1 wt. % to about 1.5 wt. %, or from about 0.1 wt. % to about 1.0 wt. %, or from about 0.1 wt. % to about 0.75 wt. %, or from about 0.1 wt. % to about 0.5 wt. %, or from about 0.2 wt. % to about 2.5 wt. %, or from about 0.2 wt. % to about 1.5 wt. %, or from about 0.2 wt. % to about 1.0 wt. %, or from about 0.2 wt. % to about 0.75 wt. %, or from about 0.2 wt. % to about 0.5 wt. %, or from about 0.5 w. % to about 2.5 wt. %, or from about 0.5 wt. % to about 1.5 wt. %, or from about 0.5 wt. % to about 1.0 wt. %, or from about 0.5 wt. % to about 0.75 wt. %, of dispersant.

The aqueous suspension may further comprise one or more pH modifiers. The one or more pH modifiers may comprise (e.g. consist of) one or more alkali salts such as sodium hydroxide. For example, the aqueous suspension may comprise no less than about 0.1 wt. %, for example, no less than about 0.5 wt. %, pH modifiers (e.g. alkali salts, for example, sodium hydroxide). The aqueous suspension may comprise no more than about 1.5 wt. %, for example, no more than about 1.0 wt. %, or no more than about 0.5 wt. %, pH modifiers (e.g. alkali salts, for example, sodium hydroxide). The aqueous suspension may comprise from about 0.1 wt. % to about 1.5 wt. %, for example, from about 0.5 wt. % to about 1.5 wt. %, or from about 0.1 wt. % to about 1.0 wt. %, or from about 0.5 wt. % to about 1.0 wt. %, or from about 0.1 wt. % to about 0.5 wt. %, pH modifiers (e.g. alkali salts, for example, sodium hydroxide).

The aqueous suspension may be alkaline. The aqueous suspension may have a pH of no less than about 7.5, for example, no less than about 8.0, or no less than about 8.5, or no less than about 9.0. The aqueous suspension may have a pH of no greater than about 12.0, for example, no greater than about 11.0, or no greater than about 10.0. The aqueous suspension may have a pH of from about 7.5 to about 12.0, for example, from about 7.5 to about 11.0, or from about 7.5 to about 10.0, or from about 8.0 to about 12.0, or from about 8.0 to about 11.0, or from about 8.0 to about 10.0, or from about 8.5 to about 12.0, or from about 8.5 to about 11.0, or from about 8.5 to about 10.0, or from about 9.0 to about 12.0, or from about 9.0 to about 11.0, or from about 9.0 to about 10.0.

The aqueous suspension may comprise: from about 0.1 wt. % to about 2.5 wt. %, for example, from about 0.1 wt. % to about 1.5 wt. %, or from about 0.1 wt. % to about 1.0 wt. %, or from about 0.1 wt. % to about 0.75 wt. %, or from about 0.1 wt. % to about 0.5 wt. %, or from about 0.2 wt. % to about 2.5 wt. %, or from about 0.2 wt. % to about 1.5 wt. %, or from about 0.2 wt. % to about 1.0 wt. %, or from about 0.2 wt. % to about 0.75 wt. %, or from about 0.2 wt. % to about 0.5 wt. %, or from about 0.5 w. % to about 2.5 wt. %, or from about 0.5 wt. % to about 1.5 wt. %, or from about 0.5 wt. % to about 1.0 wt. %, or from about 0.5 wt. % to about 0.75 wt. %, of dispersant; and from about 0.1 wt. % to about 1.5 wt. %, for example, from about 0.5 wt. % to about 1.5 wt. %, or from about 0.1 wt. % to about 1.0 wt. %, or from about 0.5 wt. % to about 1.0 wt. %, or from about 0.1 wt. % to about 0.5 wt. %, pH modifiers (e.g. alkali salts, for example, sodium hydroxide).

The wet grinding may be carried out for at least about 10 minutes, or at least about 20 minutes, or at least about 30 minutes, or at least about 40 minutes, or at least about 50 minutes, or at least about 60 minutes, or at least about 70 minutes, or at least about 80 minutes, or at about 90 minutes, or at least about 100 minutes, or at least about 125 minutes, or at least about 140 minutes, or at least about 150 minutes, or at least about 200 minutes, or at least about 210 minutes. The wet grinding may be carried out for no more than about 24 hours, for example, no more than about 12 hours, or no more than about 6 hours, or no more than about 330 minutes, or no more than about 300 minutes, or no more than about 220 minutes, or no more than about 210 minutes, or no more than about 200 minutes, or no more than about 160 minutes, or no more than about 100 minutes, or no more than about 90 minutes, or no more than about 60 minutes, or no more than about 40 minutes. The wet grinding may be carried out for from about 10 minutes to about 24 hours, for example, from about 10 minutes to about 12 hours, or from about 10 minutes to about 6 hours, or from about 10 minutes to about 330 minutes, or from about 10 minutes to about 300 minutes, or from about 10 minutes to about 220 minutes, or from about 20 minutes to about 40 minutes, or from about 80 minutes to about 100 minutes, or from about 140 minutes to about 160 minutes, or from about 200 minutes to about 220 minutes.

The wet grinding may be carried out a temperature of no less than about 25 °C, for example, no less than about 40 °C, or no less than about 50 °C, or no less than about 60 °C, or no less than about 70 °C. The wet grinding may be carried out a temperature no greater than about 100 °C, for example, no greater than about 90 °C, or no greater than about 80 °C, or no greater than about 70 °C, or no greater than about 60 °C. The wet grinding may be carried out at a temperature from about 25 °C to about 100 °C, for example, from about 25 °C to about 90 °C, or from about 25 °C to about 80 °C, or from about 25 °C to about 70 °C, or from about 25 °C to about 60 °C, or from about 40 °C to about 100 °C, or from about 40 °C to about 90 °C, or from about 40 °C to about 80 °C, or from about 40 °C to about 70 °C, or from about 50 °C to about 100 °C, or from about 50 °C to about 90 °C, or from about 50 °C to about 80 °C, or from about 50 °C to about 70 °C, or from about 50 °C to about 60 °C, or from about 60 °C to about 100 °C, or from about 60 °C to about 90 °C, or from about 60 °C to about 80 °C, or from about 60 °C to about 70 °C, or from about 70 °C to about 100 °C, or from about 70 °C to about 90 °C, or from about 70 °C to about 80 °C.

The initial solids content of the aqueous suspension may be at least about 50 wt. %, for example, at least about 51 wt. %, or at least about 52 wt. %, or at least about 53 wt. %, or at least about 54 wt. %, or at least about 55 wt. %, or at least about 56 wt. %, or at least about 57 wt. %, or at least about 58 wt. %, or at least about 59 wt. %, or at least about 60 wt. %, based on the total weight of the aqueous suspension. The initial solids content of the aqueous suspension may be no greater than about 70 wt. %, for example, no greater than about 65 wt. %, or no greater than about 60 wt. %, based on the total weight of the aqueous suspension. The initial solids content of the aqueous suspension may from about 50 wt. % to about 70 wt. %, for example, from about 51 wt. % to about 70 wt. %, or from about 52 wt. % to about 70 wt. %, or from about 53 wt. % to about 70 wt. %, or from about 54 wt. % to about 70 wt. %, or from about 55 wt. % to about 70 wt. %, or from about 56 wt. % to about 70 wt. %, or from about 57 wt. % to about 70 wt. %, or from about 58 wt. % to about 70 wt. %, or from about 59 wt. % to about 70 wt. %, or from about 60 wt. % to about 70 wt. %, or from about 50 wt. % to about 65 wt. %, or from about 51 wt. % to about 65 wt. %, or from about 52 wt. % to about 65 wt. %, or from about 53 wt. % to about 65 wt. %, or from about 54 wt. % to about 65 wt. %, or from about 55 wt. % to about 65 wt. %, or from about 56 wt. % to about 65 wt. %, or from about 57 wt. % to about 65 wt. %, or from about 58 wt. % to about 65 wt. %, or from about 59 wt. % to about 65 wt. %, or from about 60 wt. % to about 65 wt. %, or from about 50 wt. % to about 60 wt. %, or from about 51 wt. % to about 60 wt. %, or from about 52 wt. % to about 60 wt. %, or from about 53 wt. % to about 60 wt. %, or from about 54 wt. % to about 60 wt. %, or from about 55 wt. % to about 60 wt. %, or from about 56 wt. % to about 60 wt. %, or from about 57 wt. % to about 60 wt. %, or from about 58 wt. % to about 60 wt. %, or from about 59 wt. % to about 60 wt. %, or from about 60 wt. % to about 60 wt. %, based on the total weight of the aqueous suspension.

The final solids content of the aqueous suspension (i.e. after wet grinding) may be at least about 50 wt. %, for example, at least about 51 wt. %, or at least about 52 wt. %, or at least about 53 wt. %, or at least about 54 wt. %, or at least about 55 wt. %, or at least about 56 wt. %, or at least about 57 wt. %, or at least about 58 wt. %, or at least about 59 wt. %, or at least about 60 wt. %, based on the total weight of the aqueous suspension. The final solids content of the aqueous suspension may be no greater than about 70 wt. %, for example, no greater than about 65 wt. %, or no greater than about 60 wt. %, based on the total weight of the aqueous suspension. The final solids content of the aqueous suspension may from about 50 wt. % to about 70 wt. %, for example, from about 51 wt. % to about 70 wt. %, or from about 52 wt. % to about 70 wt. %, or from about 53 wt. % to about 70 wt. %, or from about 54 wt. % to about 70 wt. %, or from about 55 wt. % to about 70 wt. %, or from about 56 wt. % to about 70 wt. %, or from about 57 wt. % to about 70 wt. %, or from about 58 wt. % to about 70 wt. %, or from about 59 wt. % to about 70 wt. %, or from about 60 wt. % to about 70 wt. %, or from about 50 wt. % to about 65 wt. %, or from about 51 wt. % to about 65 wt. %, or from about 52 wt. % to about 65 wt. %, or from about 53 wt. % to about 65 wt. %, or from about 54 wt. % to about 65 wt. %, or from about 55 wt. % to about 65 wt. %, or from about 56 wt. % to about 65 wt. %, or from about 57 wt. % to about 65 wt. %, or from about 58 wt. % to about 65 wt. %, or from about 59 wt. % to about 65 wt. %, or from about 60 wt. % to about 65 wt. %, or from about 50 wt. % to about 60 wt. %, or from about 51 wt. % to about 60 wt. %, or from about 52 wt. % to about 60 wt. %, or from about 53 wt. % to about 60 wt. %, or from about 54 wt. % to about 60 wt. %, or from about 55 wt. % to about 60 wt. %, or from about 56 wt. % to about 60 wt. %, or from about 57 wt. % to about 60 wt. %, or from about 58 wt. % to about 60 wt. %, or from about 59 wt. % to about 60 wt. %, or from about 60 wt. % to about 60 wt. %, based on the total weight of the aqueous suspension.

After grinding, the aqueous suspension may be the aqueous slurry. Accordingly, the solids content of the aqueous slurry may be at least about 50 wt. %, for example, at least about 51 wt. %, or at least about 52 wt. %, or at least about 53 wt. %, or at least about 54 wt. %, or at least about 55 wt. %, or at least about 56 wt. %, or at least about 57 wt. %, or at least about 58 wt. %, or at least about 59 wt. %, or at least about 60 wt. %, based on the total weight of the aqueous slurry. The solids content of the aqueous slurry may be no greater than about 70 wt. %, for example, no greater than about 65 wt. %, or no greater than about 60 wt. %, based on the total weight of the aqueous slurry. The solids content of the aqueous slurry may from about 50 wt. % to about 70 wt. %, for example, from about 51 wt. % to about 70 wt. %, or from about 52 wt. % to about 70 wt. %, or from about 53 wt. % to about 70 wt. %, or from about 54 wt. % to about 70 wt. %, or from about 55 wt. % to about 70 wt. %, or from about 56 wt. % to about 70 wt. %, or from about 57 wt. % to about 70 wt. %, or from about 58 wt. % to about 70 wt. %, or from about 59 wt. % to about 70 wt. %, or from about 60 wt. % to about 70 wt. %, or from about 50 wt. % to about 65 wt. %, or from about 51 wt. % to about 65 wt. %, or from about 52 wt. % to about 65 wt. %, or from about 53 wt. % to about 65 wt. %, or from about 54 wt. % to about 65 wt. %, or from about 55 wt. % to about 65 wt. %, or from about 56 wt. % to about 65 wt. %, or from about 57 wt. % to about 65 wt. %, or from about 58 wt. % to about 65 wt. %, or from about 59 wt. % to about 65 wt. %, or from about 60 wt. % to about 65 wt. %, or from about 50 wt. % to about 60 wt. %, or from about 51 wt. % to about 60 wt. %, or from about 52 wt. % to about 60 wt. %, or from about 53 wt. % to about 60 wt. %, or from about 54 wt. % to about 60 wt. %, or from about 55 wt. % to about 60 wt. %, or from about 56 wt. % to about 60 wt. %, or from about 57 wt. % to about 60 wt. %, or from about 58 wt. % to about 60 wt. %, or from about 59 wt. % to about 60 wt. %, or from about 60 wt. % to about 60 wt. %, based on the total weight of the aqueous slurry.

The wet grinding may be carried out in any suitable grinding apparatus known in the art. For example, the wet grinding may be carried out in a sand grinder, for example, a cascade of sand grinders, a sand grinder operated in a batch mode and/or a horizontal disc grinder. The sand grinder may be a vertical sand grinder. The wet grinding may make use of a grinding medium such as ceramic beads and/or zirconia beads. The size, type and amount of grinding medium may be varied or adjusted accordingly. Beads may range in size from 0.1 to 3 mm, for example, from about 0.5 to 3 mm. The quantity of grinding medium may be such that the volume of grinding medium is between about 40 % and 90 % of the total volume (suspension and grinding medium), for example, between about 60 % and 90 % of the total volume. Wet grinding may be carried out in accordance with the wet grinding methods and apparatus described in WO-A-98/45374, the contents of which are incorporated herein by reference. Generally, the wet grinding is carried out to obtain the desired aqueous slurry. The operating conditions for wet grinding may be adjusted in order to obtain such an aqueous slurry. The grinding energy may be varied or adjusted accordingly. For example, in an industrial scale wet-grinding process, the grinding energy may be in the range of from about 150 and 700 kwh per dry ton, for example, from about 250 to about 700 kwh per dry ton, or from about 350 to about 700 kwh per dry ton, or from about 450 to about 700 kwh per dry ton, or from about 500 to about 700 kwh per dry ton, or from about 500 to about 600 kwh per dry ton, or from about 520 to about 575 kwh per dry ton.

The aqueous slurry containing the talc particulate may be used directly to make products such as formulations for barrier coatings. For example, the aqueous slurry may be combined with one or more binders (e.g. in the form of latex) to produce a formulation for a barrier coating. Conventional slurries are typically dried before re-dispersion in water for a specific application. Using the aqueous slurry containing the talc particulate directly, i.e., without drying, to make products such as barrier coatings may therefore reduce water usage by up to about 40 %. Not needing to dry the aqueous slurry further reduces the carbon footprint of the process, the aqueous slurry and products made therefrom.

Alternatively, the talc particulate may be separated from the aqueous slurry and/or dried. Dried talc particulate may then be used to make products such as formulations for barrier coatings. Dried talc particulate may be classified (e.g. by air classification or sieving) prior to use.

*Uses of talc particulate*

The talc particulate may be used in a coating, for example, a barrier coating for a paper product. The barrier coating may comprise the talc particulate and at least one binder.

The term paper, as used in connection with the present invention, should be understood to mean all forms of paper, including board, such as, for example, white-lined board and linerboard, cardboard, paperboard, coated board, and the like. There are numerous types of paper, coated or uncoated, which may be coated using the compositions disclosed herein, including paper suitable for food packaging, perishable goods other than food, e.g., pharmaceutical products and compositions, books, magazines, newspapers and the like, and office papers. The paper may be calendered or super calendared as appropriate; for example super calendered magazine paper for rotogravure and offset printing may be made according to the present methods. Paper suitable for light weight coating (LWC), medium weight coating (MWC) or machine finished pigmentisation (MFP) may also be coated using the present compositions.

The paper may, for example, have first and second surfaces. The coating compositions described herein may, for example, be present on the first surface, the second surface or both. For example, the coating compositions may be present on the surface which faces the exterior of the paper product when it is formed into a three-dimensional product. The first and/or second surfaces may or may not have other intermediary coatings or layers between each surface and the coating composition described herein. The coating compositions may, for example, be applied directly to the paper substrate.

A paper product comprising a barrier coating may be made by a method of coating a paper product with a coating composition comprising at least one binder and the talc particulate according to the invention. The coating composition may be as described herein.

The coating process may be carried out using standard techniques which are known to the skilled person. The coating process may also involve calendering or super-calendering the coated substrate.

Methods of coating paper and other sheet materials, and apparatus for performing the methods, are widely published and well known. Such known methods and apparatus may conveniently be used for preparing coated paper. For example, there is a review of such methods published in Pulp and Paper International, May 1994, page 18 *et seq.* Sheets may be coated on the sheet forming machine, i.e., "on-machine," or "off-machine" on a coater or coating machine. Use of high solids compositions is desirable in the coating method because it leaves less water to evaporate subsequently. However, as is well known in the art, the solids level should not be so high that high viscosity and levelling problems are introduced. The methods of coating may be performed using an apparatus comprising (i) an application for applying the coating composition to the material to be coated and (ii) a metering device for ensuring that a correct level of coating composition is applied. When an excess of coating composition is applied to the applicator, the metering device is downstream of it. Alternatively, the correct amount of coating composition may be applied to the applicator by the metering device, e.g., as a film press. At the points of coating application and metering, the paper web support ranges from a backing roll, e.g. via one or two applicators, to nothing (i.e. just tension). The time the coating is in contact with the paper before the excess is finally removed is the dwell time - and this may be short, long or variable. The coating may be added by a coating head at a coating station. According to the quality desired, paper grades are uncoated, single-coated, double-coated and even triple-coated. When providing more than one coat, the initial coat (precoat) may have a cheaper formulation and optionally coarser pigment in the coating composition. A coater that is applying coating on each side of the paper will have two or four coating heads, depending on the number of coating layers applied on each side. Most coating heads coat only one side at a time, but some roll coaters (e.g., film presses, gate rolls, and size presses) coat both sides in one pass.

Examples of known coaters which may be employed include, without limitation, air knife coaters, blade coaters, rod coaters, bar coaters, multi-head coaters, roll coaters, roll or blade coaters, cast coaters, laboratory coaters, gravure coaters, kisscoaters, liquid application systems, reverse roll coaters, curtain coaters, spray coaters and extrusion coaters.

Water may be added to the solids comprising the coating composition to give a concentration of solids which is preferably such that, when the composition is coated onto a sheet to a desired target coating weight, the composition has a rheology which is suitable to enable the composition to be coated with a pressure (i.e., a blade pressure) of between 1 and 1.5 bar.

The paper may be formable or formed into a three-dimensional product, which may be suitable as food grade or pharmaceutical grade packaging.

The barrier coating may be applied to the paper product to achieve a coat weight no less than about 5 $g/m^2$, for example, no less than about 6 $g/m^2$, or no less than about 7 $g/m^2$, or no less than about 8 $g/m^2$, or no less than about 9 $g/m^2$, or no less than about 10 $g/m^2$, or no less than about 11 $g/m^2$, or no less than about 12 $g/m^2$, or no less than about 13 $g/m^2$. The barrier coating may be applied to the paper product to achieve a coat weight no greater than about 20 $g/m^2$, for example, no greater than about 19 $g/m^2$, or no greater than about 15 $g/m^2$, or no greater than about 13 $g/m^2$. The barrier coating may be applied to the paper product to achieve a coat weight from about 5 $g/m^2$ to about 20 $g/m^2$, for example, from about 5 $g/m^2$ to about 19 $g/m^2$, or from about 5 $g/m^2$ to about 15 $g/m^2$, or from about 5 $g/m^2$ to about 13 $g/m^2$, or from about 6 $g/m^2$ to about 20 $g/m^2$, or from about 6 $g/m^2$ to about 19 $g/m^2$, or from about 6 $g/m^2$ to about 15 $g/m^2$, or from about 6 $g/m^2$ to about 13 $g/m^2$, or from about 7 $g/m^2$ to about 20 $g/m^2$, or from about 7 $g/m^2$ to about 19 $g/m^2$, or from about 7 $g/m^2$ to about 15 $g/m^2$, or from about 7 $g/m^2$ to about 13 $g/m^2$, or from about 8 $g/m^2$ to about 20 $g/m^2$, or from about 8 $g/m^2$ to about 19 $g/m^2$, or from about 8 $g/m^2$ to about 15 $g/m^2$, or from about 8 $g/m^2$ to about 13 $g/m^2$, or from about 9 $g/m^2$ to about 20 $g/m^2$, or from about 9 $g/m^2$ to about 19 $g/m^2$, or from about 9 $g/m^2$ to about 15 $g/m^2$, or from about 9 $g/m^2$ to about 13 $g/m^2$, or from about 10 $g/m^2$ to about 20 $g/m^2$, or from about 10 $g/m^2$ to about 19 $g/m^2$, or from about 10 $g/m^2$ to about 15 $g/m^2$, or from about 10 $g/m^2$ to about 13 $g/m^2$, or from about 11 $g/m^2$ to about 20 $g/m^2$, or from about 11 $g/m^2$ to about 19 $g/m^2$, or from about 11 $g/m^2$ to about 15 $g/m^2$, or from about 11 $g/m^2$ to about 13 $g/m^2$, or from about 12 $g/m^2$ to about 20 $g/m^2$, or from about 12 $g/m^2$ to about 19 $g/m^2$, or from about 12 $g/m^2$ to about 15 $g/m^2$, or from about 12 $g/m^2$ to about 13 $g/m^2$, or from about 13 $g/m^2$ to about 20 $g/m^2$, or from about 13 $g/m^2$ to about 19 $g/m^2$, or from about 13 $g/m^2$ to about 15 $g/m^2$.

The talc particulate may be used in barrier coating to improve the water resistance of a paper product coated with the barrier coating. For example, the talc particulate may be used in the barrier coating to reduce the water absorptiveness of the paper product coated with the barrier coating, for example, as determined in accordance with the Cobb 1800 test (according to ISO 535:2014). Use of the talc particulate according to the invention may reduce the water absorptiveness (as determined in accordance with the Cobb 1800 test, according to ISO 535:2014) of the paper product coated with the barrier coating by at least about 3 $g/m^2$, for example, at least about 4 $g/m^2$, or at least about 5 $g/m^2$, or at least about 10 $g/m^2$, or at least about 11 $g/m^2$, or at least about 12 $g/m^2$, or at least about 13 $g/m^2$, or at least about 14 $g/m^2$, in comparison to the same paper product coated with a barrier coating which is identical except that it contains the same amount of a talc particulate not according to the invention.

The talc particulate may be used in a barrier coating to improve the moisture resistance of a paper product coated with the barrier coating. For example, the talc particulate may be used in the barrier coating to increase the moisture resistance of the paper product coated with the barrier coating, for example, as determined in accordance with the jMVTR test (according to ISO 2528:2017). Use of the talc particulate according to the invention may increase the moisture resistance (as determined in accordance with the jMVTR test) of the paper product coated with the barrier coating by at least about 100 $g/m^2/d$, for example, at least about 200 $g/m^2/d$, or at least about 300 $g/m^2/d$, or at least about 400 $g/m^2/d$, or at least about 500 $g/m^2/d$, in comparison to the same paper product coated with a barrier coating which is identical except that it contains the same amount of a talc particulate not according to the invention.

For the following tests, a coated paper product is produced by coating a base paper with a coating composition comprising 60 pph of the talc particulate with the remainder being a polyvinyl alcohol latex, at a coatweight of 7 to 10 gsm. The base paper may be precoated with up to 12 gsm of a pre-coating composition. The pre-coating composition may comprise talc particulate having at least 60% of particles smaller than 2 $\mu$m and less than 15 pph of latex.

Unless otherwise stated, the jMVTR of a coated paper product is measured as follows. The coated paper product is first cut into circles of diameter 62.5 mm. The coated paper samples are left in a fume cupboard overnight prior to testing. Silica gel is placed in the bottom of a sealable beaker. The beaker is then covered by the coated paper samples with the coated side facing inwards and the edges are sealed. The beaker is then weighed accurately to 4 decimal places and this is taken as time zero. The sealed beakers are left to stand in the fume cupboard and reweighed over a number of days, with periodic measurements. The test is carried out at 38°C and 90% relative humidity. A lower mass increase corresponds to a lower moisture transmission rate and so a better barrier to moisture.

The talc particulate may be used in a barrier coating to improve the oil and grease resistance of a paper product coated with the barrier coating. For example, the talc particulate may be used in the barrier coating to increase the oil and grease resistance of the paper product coated with the barrier coating, for example, as determined in accordance with the Kit Test or the Olive oil test.

Unless otherwise stated, a Kit test value is measured on the same coated paper product using the test method outlined in TAPPI 559 pm-96 but extended to 16 reagent blends. The Kit test solutions are all blends of castor oil, toluene and n-heptane in varying levels. The Kit test solution numbered 1 contains the most castor oil and number 16 contains the most heptane. An intermediate numbered Kit test solution e.g. 8 is pipetted in drops on the surface of the coated paper then wiped away after 15 seconds. The test area is then examined for signs of penetration into the surface. Any penetration is termed as a failure and the test is repeated with the next lowest numbered solution until there is no penetration i.e. a pass. Conversely, if the initial test yields no penetration, then the next highest Kit test solution is tested until there is failure. The highest number of Kit test solution that does not cause failure is quoted as the Kit test value.

Unless otherwise stated, an Olive oil test value is measured by putting two drops (about 0,16 mL) of oil on a coated paper surface and measuring the time needed to stain the opposite side of the paper. Staining is assessed by visual determination.

It will be understood that the invention is not limited to the embodiments described above and various modifications and improvements can be made without departing from the concepts described herein. Except where mutually exclusive, any of the features may be employed separately or in combination with any other features and the disclosure extends to and includes all combinations and sub-combinations of one or more features described herein.

For the avoidance of doubt, the present application is directed to the subject-matter described in the following numbered paragraphs:

1. A talc particulate, wherein the talc particulate has: a BET specific surface area of from about 2.0 $m^2/g$ to about 10.0 $m^2/g$, a $d_{50laser}$ of from about 10.0 $\mu$m to 15.0 $\mu$m, a $d_{50sedi}$ of no greater than about 7.5 $\mu$m, and a lamellarity index of from about 1.6 to about 5.0, wherein a ratio of the lamellarity index to the BET specific surface area is at least about 0.4 $g/m^2$.

2. The talc particulate according to paragraph 1, wherein the talc particulate has a BET specific surface area of from about 3.0 $m^2/g$ to about 8.0 $m^2/g$, for example, from about 5.0 $m^2/g$ to about 8.0 $m^2/g$, or from about 7.0 $m^2/g$ to about 8.0 $m^2/g$.

3. The talc particulate according to paragraph 1 or paragraph 2, wherein the talc particulate has a $d_{50laser}$ of from about 11.0 $\mu$m to about 15.0 $\mu$m, for example, from about 11.0 $\mu$m to about 13.5 $\mu$m, or from about 11.0 $\mu$m to about 12.5 $\mu$m, or from about 11.0 $\mu$m to about 12.0 $\mu$m.

4. The talc particulate according to any one of the preceding paragraphs, wherein the talc particulate has a $d_{50sedi}$ of from about 2.0 $\mu$m to about 7.5 $\mu$m, for example, from about 2.0 $\mu$m to about 5.5 $\mu$m, or from about 2.0 $\mu$m to about 4.0 $\mu$m, or from about 2.0 $\mu$m to about 3.0 $\mu$m, or from about 2.0 $\mu$m to about 2.5 $\mu$m.

5. The talc particulate according to any one of the preceding paragraphs, wherein the talc particulate has a lamellarity index of from about 2.0 to about 4.0, for example, from about 3.0 to about 4.0, or from about 3.5 to about 4.0.

6. The talc particulate according to any one of the preceding paragraphs, wherein from about 10 % by weight to about 50 % by weight, for example, from about 20 % by weight to about 50 % by weight, or from about 30 % by weight to about 48 % by weight, or from about 40 % by weight to about 48 % by weight, of the particles of the talc particulate has a particle size, by sedigraph, equal to or smaller than about 2.0 μm.

7. The talc particulate according to any one of the proceeding paragraphs, wherein the talc particulate has a shape factor of at least about 40, for example, from about 45 to about 100, or from about 65 to about 100, or from about 80 to about 100, or from about 90 to about 100.

8. A slurry composition comprising at least about 50 % by weight, for example, at least about 55 % by weight, or at least about 60 % by weight, optionally no greater than about 70 % by weight, of a talc particulate according to any one of the preceding paragraphs.

9. A formulation for a barrier coating, the formulation comprising from about 20 % by weight to about 65 % by weight of a talc particulate according to any one of paragraphs 1 to 8 and from about 80 % by weight to about 35 % by weight of binder, based on the total solids content of the formulation.

10. A paper product coated with a barrier coating according to paragraph 9, for example, wherein the coat weight of the barrier coating is at least about 5 gsm.

11. A method for making a talc particulate, the method comprising: wet-grinding an aqueous suspension of a talc feed material in the presence of a dispersant; wherein the initial solids content of the aqueous suspension is at least about 50 % by weight, based on the total weight of the aqueous suspension, and wherein the wet-grinding is carried out under conditions suitable to obtain an aqueous slurry comprising a talc particulate according to any of paragraphs 1 to 8.

12. A method according to paragraph 11, wherein the wet-grinding is carried out in a sand grinder, for example, a cascade of sand grinders.

13. A method according to paragraph 11 or 12, wherein the wet-grinding is carried out in the presence of a pH modifier, for example, to render the aqueous suspension alkaline.

14. A method according to paragraph 11, 12 or 13, wherein the dispersant is one or more of a polyacrylate or a polycarboxylate, preferably a polycarboxylate.

15. A method according to any one of paragraphs 11-14, wherein the wet-grinding is carried out in the presence of grinding medium.

16. A method according to any one of paragraphs 11-15, wherein the grinding energy is in the range of from about 150 and 700 kwh per dry ton, for example, 500 to 600 kwh per dry ton.

17. Use of a talc particulate according to any one of paragraphs 1 to 8 in a barrier coating.

18. Use of a talc particulate according to any one of paragraphs 1 to 8 in a barrier coating: to improve the water resistance of a paper product coated with the barrier coating, for example, as determined in accordance with the Cobb 1800 test; to improve the moisture resistance of a paper product coated with the barrier coating, for example, as determined in accordance with the jMVTR test; and/or to improve the oil and grease resistance of a paper product coated with the barrier coating, for example, as determined in accordance with Kit test/Olive oil test.

**EXAMPLES**

*Example 1*

An aqueous suspension of a talc particulate was prepared. The composition of the aqueous suspension is shown in Table 1. The total dry solids content of the aqueous suspension was 59.1 wt. %.

Table 1.

| Component | Weight (g) |
|---|---|
| Talc A | 2700 |
| Water | 1820 |
| Functional dispersant (containing 36.5 wt. % polycarboxylate) | 55.5 |
| NaOH | 7.8 |

Talc A is a platy white talc (available as Luzenac 00S from Imerys Performance Minerals) having a $d_{10sedi}$ of 2.24 $\mu$m, a $d_{50sedi}$ of 10 $\mu$m and a $d_{90sedi}$ of 26 $\mu$m.

A talc slurry was prepared by grinding the aqueous suspension in a sand mill laboratory vertical attritor grinder having a 3 litre chamber and operated at 1500 rpm using 7.6 kg of ceramic mullite beads as grinding medium. Values of $d_{10sedi}$, $d_{50sedi}$ and $d_{90sedi}$ were measured after grinding at 60°C for 10 minutes, 20 minutes, 30 minutes and 40 minutes. Samples of the slurry were diluted with water prior to carrying out sedigraph measurements. The results are given in Table 2.

Table 2.

|  | 10 minutes | 20 minutes | 30 minutes | 40 minutes |
|---|---|---|---|---|
| $d_{90sedi}$ | 15.3 | 12.5 | 10.6 | 9.6 |
| $d_{50sedi}$ | 5.14 | 4.1 | 3.4 | 3.0 |
| $d_{10sedi}$ | 0.8 | 0.5 | 0.4 | 0.4 |

*Example 2*

An aqueous suspension of a talc particulate having the composition shown in Table 3 was prepared.

Table 3.

| Component | Weight (g) |
|---|---|
| Talc A | 2700 |
| Water | 1820 |
| Functional dispersant (containing 36.5 wt. % polycarboxylate) | 55.5 |
| NaOH | 7.8 |

Talc A is a platy white talc (available as Luzenac 00S from Imerys Performance Minerals) having a $d_{10sedi}$ of 2.24 $\mu$m, a $d_{50sedi}$ of 10 $\mu$m and a $d_{90sedi}$ of 26 $\mu$m.

A talc slurry was prepared by grinding the aqueous suspension using a sand mill lab vertical attritor grinder having a 3 litre chamber and operated at 1500 rpm using 7.6 kg of ceramic mullite beads as grinding medium. Values of $d_{50sedi}$ were measured after grinding at 60°C for 10 minutes, 20 minutes, 30 minutes, 40 minutes, 50 minutes, 60 minutes, 70 minutes and 80 minutes. Samples of the slurry were diluted with water prior to carrying out sedigraph measurements. The results are given in Table 4.

Table 4.

| Time (minutes) | 10 | 20 | 30 | 40 | 50 | 60 | 70 | 80 |
|---|---|---|---|---|---|---|---|---|
| $d_{50sedi}$ | 4.9 | 4.1 | 3.6 | 3.3 | 2.9 | 2.6 | 2.4 | 2.2 |

After 80 minutes of grinding, the temperature of the talc slurry was 73°C, the slurry flow time was 68 seconds, the pH was 9.4 and the dry solids content was 59.84 wt. %. The flow time of the slurry was measured by measuring the time taken in seconds for a 50 ml volume of slurry in a Ford cup to flow through an outlet orifice having a 4 mm diameter.

The flow time of the slurry is indicative of its viscosity.

*Example 3*

An aqueous suspension of a talc particulate having the composition shown in Table 5 was prepared.

Table 5.

| Component | Weight (kg) |
|---|---|
| Talc B | 3300 |
| Water | 2200 |
| Functional dispersant (containing 36.5 wt. % polycarboxylate) | 67.9 |
| NaOH (30 wt. % solution) | 31.5 |

Talc B is a platy talc (available as Luzenac 1445 from Imerys Performance Minerals) having a $d_{50sedi}$ of 10 $\mu$m.
The aqueous suspension was prepared by first dissolving the NaOH and the dispersant in the water, waiting 5 minutes, and then adding the talc. The density of the aqueous suspension was found to be 1.426 g/cm$^3$.
20 minutes after preparing the aqueous suspension, a talc slurry was prepared by grinding the aqueous suspension using a vertical sand mill (operated at 380A motor intensity using 4000 kg of ceramic mullite beads as grinding medium). Values of flow were measured after grinding for 30 minutes, 60 minutes, 90 minutes, 120 minutes, 150 minutes, 170 minutes, 190 minutes, 210 minutes and 230 minutes by extracting a sample of 10 litres from the slurry each time. The results are given in Table 6.

Table 6.

| Time (minutes) | 30 | 60 | 90 | 120 | 150 | 170 | 190 | 210 | 230 |
|---|---|---|---|---|---|---|---|---|---|
| Flow time (seconds) | - | 11.76 | 13.98 | 14.43 | 17.49 | 19.93 | 22.62 | 29 | 34 |

The properties of the talc slurries prepared after grinding for 30 minutes, 90 minutes, 150 minutes and 210 minutes (renamed as Inventive Talc Slurries A, B, C and D, respectively) were investigated further. Results for measurements of the wt.% solids content, $d_{50sedi}$, $d_{50laser}$, wt. % having a particle size less than or equal to 2 $\mu$m by sedigraph ("wt.% 2 $\mu$m"), lamellarity index ("LI"), Panacea shape factor, BET surface area and ratio of lamellarity index to BET surface area ("LI/BET") are shown in Table 7. The samples were diluted with water prior to taking sedigraph measurements.
Corresponding values are also shown for Comparative Talc Slurries A and B. Comparative Talc Slurries A (prepared using Steaplus Prime S) and B (prepared using Lithocoat T3PF obtained by jet mill grinding) are slurries prepared using commercially available talcs in powder form, mixed with water and similar quantities of dispersants and NaOH as for the inventive talc slurries. The commercially available talcs are typically used to prepare barrier coatings for paper products.

Table 7.

| | Comparative Talc Slurry A | Comparative Talc Slurry B | Inventive Talc Slurry A | Inventive Talc Slurry B | Inventive Talc Slurry C | Inventive Talc Slurry D |
|---|---|---|---|---|---|---|
| Solids content (wt. %) | 58 | 59 | 52.1 | 53.1 | 54.9 | 56.9 |
| $d_{50sedi}$ ($\mu$m) | 2.4 | 3.1 | 5.3 | 3.6 | 2.8 | 2.4 |
| $d_{50laser}$ ($\mu$m) | 12 | 7.5 | 14.3 | 12.8 | 11.9 | 11.4 |
| wt. % 2 $\mu$m (wt. %) | 36 | 22 | 20 | 31 | 39 | 44 |

(continued)

| | Comparative Talc Slurry A | Comparative Talc Slurry B | Inventive Talc Slurry A | Inventive Talc Slurry B | Inventive Talc Slurry C | Inventive Talc Slurry D |
|---|---|---|---|---|---|---|
| LI | 4.0 | 1.4 | 1.7 | 2.6 | 3.3 | 3.8 |
| Shape factor | 115 | 39 | 48 | 78 | 88 | 93 |
| BET surface area ($m^2/g$) | 15.9 | 6 | 2.6 | 4.2 | 5.9 | 7.6 |
| LI/BET | 0.25 | 0.23 | 0.65 | 0.62 | 0.56 | 0.50 |

*Example 4*

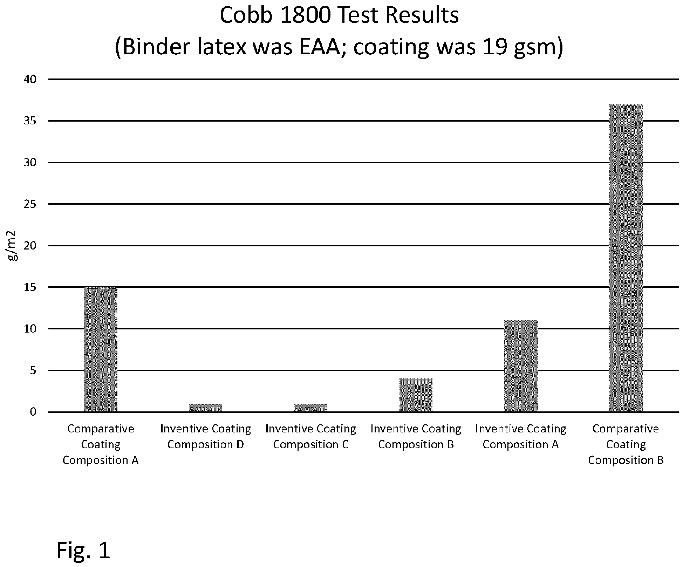

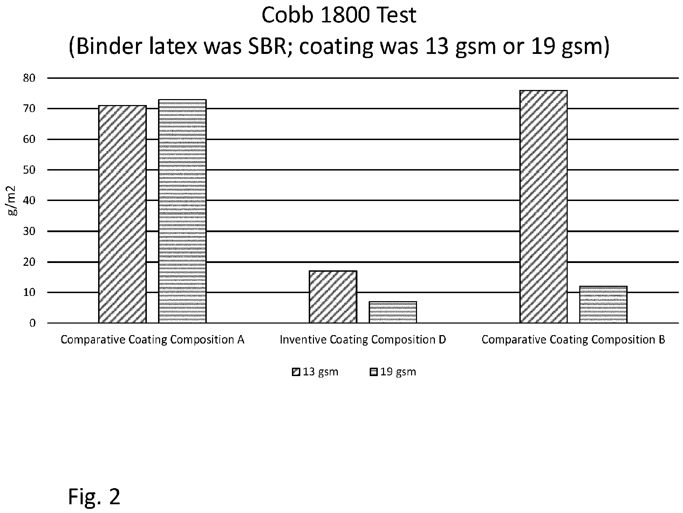

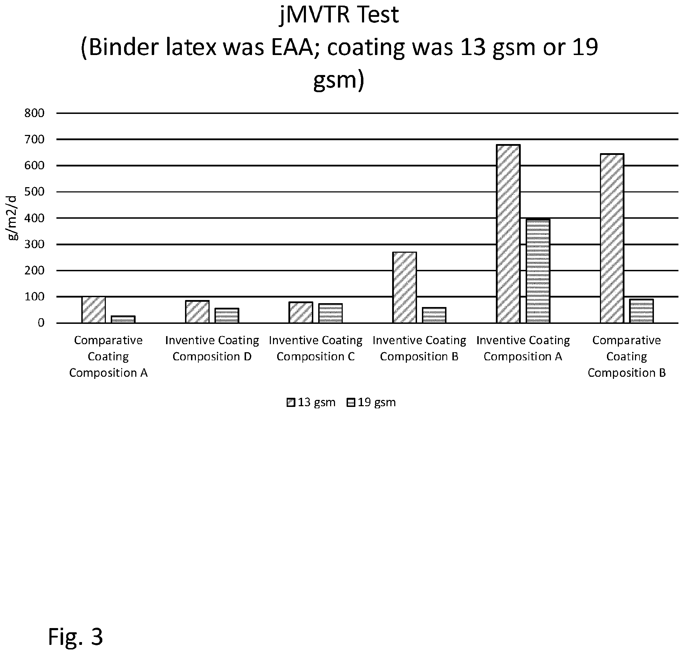

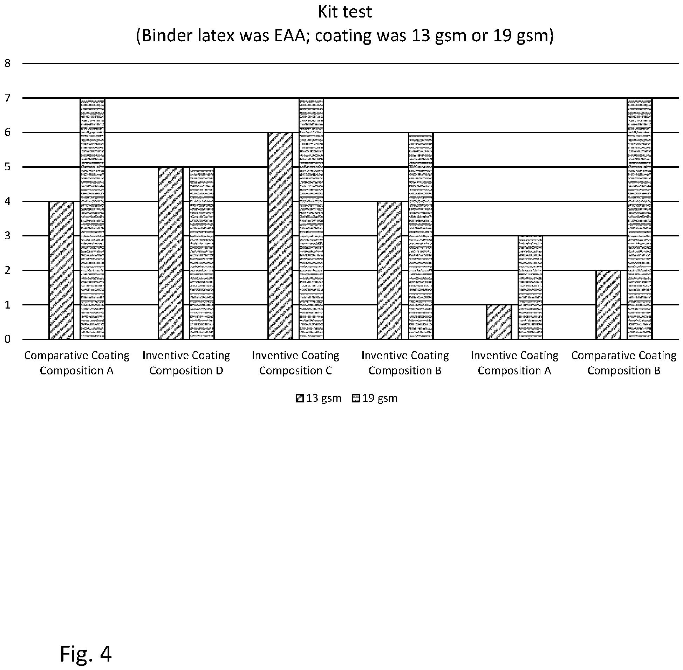

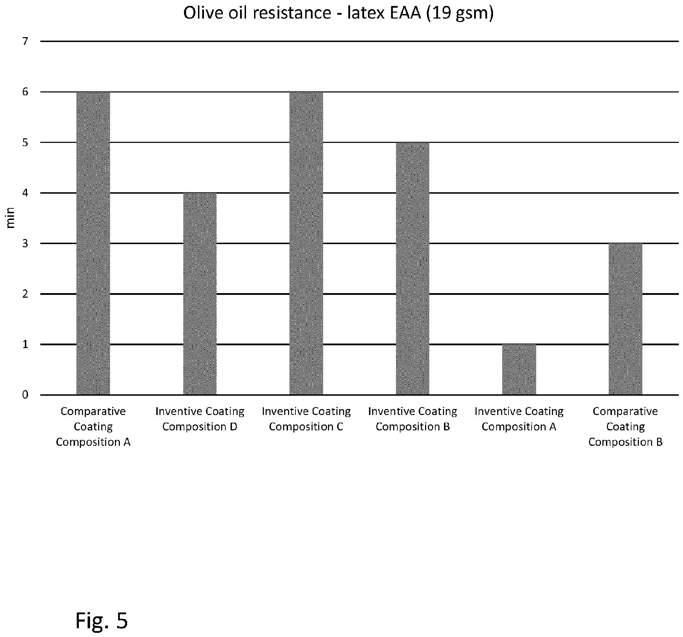

Four Inventive Coating Compositions A, B, C and D, for use as barrier coatings on paper products, were prepared by combining Inventive Talc Slurries A, B, C and D with binder latex. Each Inventive Coating Composition A, B, C and D contained 65 wt. % of the corresponding Inventive Talc Slurry and 35 wt. % of the binder latex, both measured based on the dried components (i.e. dry/dry). The binder latex contained one of ethylene acrylic acid (EAA) copolymer, styrene butadiene (SBR) copolymer or styrene acrylic (SA) copolymer. Comparative Coating Compositions A and B were prepared based on Comparative Talc Slurries A and B, respectively, in the same way. The coating compositions were applied to 82 gsm Sappi paper using a hand coater with rods to achieve coating weights of 7 $g/m^2$, 13 $g/m^2$ and 19 $g/m^2$. Cobb 1800 water absorptivity, jMVTR, Kit Test and Olive Oil Resistance were measured. The results are shown in Figures 1 to 5 for different binder latexes and different coating weights.

*Example 5 - Method for determining Particle Size Distribution (by sedigraph)*

The Particle Size Distribution (PSD) was determined using a Sedigraph III from Micromeritics Instruments.
A dispersive solution was prepared by weighing out (using an analytical balance) and fully dissolving (by mechanical stirring) 250 mg of Calgon (sodium metaphosphate) in a beaker containing 1 litre of demineralised water. This step took from 45 to 60 minutes. 1 ml of Triton X (polyethylene glycol octyl phenyl ether) was then added to the solution while stirring for at least 10 minutes. Calgon and Trion X are wetting and dispersing agents.
A sample of talc particulate was prepared for sedigraphic analysis by combining 4.8 g of the talc particulate sample with 80 ml of the dispersive solution. Initially, the talc particulate was combined with a few drops of the 80 ml of dispersive solution in a beaker and the mixture was mixed using a manual stirrer until a paste consistency was achieved. The remainder of the 80 ml of the dispersive solution was then added to the beaker. The beaker was placed in an ultrasonic bath for 30 seconds to remove air bubbles.
Sedigraphic analysis was then carried out on the dispersed sample using the Sedigraph III with the following settings:

- Dispersive solution viscosity: 0.7523 mPa.s
- Dispersive solution density: 0.9948 $g/cm^3$
- Sample density: 2.78 $g/cm^3$ for talc powder
- Diameter max.: 52 $\mu$m
- Diameter min.: 0.4 $\mu$m
- Mode: high speed
- Air bubbles detection: coarse

A result was considered to be valid when the following criteria were met:

- the Reynolds number was below 0.3;
- the baseline (on the dispersive solution only) was between 125-130 kcounts/s;
- the full scale (on the sample suspension) was between 95-105 kcounts/s; and
- the difference between base/full scale was below 35 kcounts/s.

*Example 6 - Method for determining Particle Size Distribution (by laser diffraction)*

The Particle Size Distribution (PSD) was determined using a Mastersizer 2000 from Malvern instruments.

A sample of talc particulate was prepared for laser diffraction analysis. The required quantity of talc particulate was weighed in a 50 ml beaker. For a talc particulate having a $d_{50}$ (by sedigraph) equal to or greater than 10 $\mu$m, a quantity of between 1 g and 2 g of the talc particulate was used. For a talc particulate having a $d_{50}$ (by sedigraph) less than 10 $\mu$m, a quantity of between 0.2 g and 0.5 g of the talc particulate was used.

For coarse talc particulates (having a $d_{50}$, by sedigraph, equal to or greater than 10 $\mu$m), the sample was combined with absolute ethanol (99.5%) wetting agent. In particular, the powder sample was distributed well at the bottom of the beaker. A few drops of ethanol was added to the powder and mixed using a manual stirrer until a paste consistency was achieved. Between 2 ml and 2.5 ml of ethanol was added to the beaker using a 3 ml disposable pipette and the suspension mixed with the manual stirrer. The beaker was placed in an ultrasonic bath for 30 seconds to remove air bubbles.

Laser diffraction analysis was then carried out on the sample using the Mastersizer 2000 with the following settings:

- Sampler: Hydro 2000G
- Measurement theory: Mie 1.589- 0.01 (i.e. the talc refractive index)
- Water refraction index: 1.33
- Measurement range: 0.02 - 2000 $\mu$m
- Result calculation model: standard analysis
- Number of snaps:

  Duration of measurement: 8 seconds
  Number of snaps per measurement: 8000 snaps
  Background noise time: 8000 snaps
  Background noise snaps: 8 seconds

- Obscuration limits:

  Low: 5 %
  High: 20 %

- Background noise alarm (value of background noise of detector n°1): below 150 units
- Measurement parameters of the sampler:

  Pump: 1800 rpm
  Stirring: 700 rpm
  Ultra-sonics: 100%

The analysis was carried out as follows:
First, it was checked that the obscuration lower limit was set to 5 % and the obscuration upper limit was set to 20 %. The stirrer speed was set to 700 rpm, the pump to 1800 rpm, and the Ultrasonics to 100 %. The intensity of the laserwas checked. If the intensity of the laser was below 77.5%, the following were checked: that the measurement cell was clean; that there were no air bubbles; and that there was no condensation on the measurement cell windows.

The background noise was measured and the intensity of the lasers (red and blue) was measured. Once the lasers were aligned, the intensity of the lasers and the intensity of the background noise (which must be in continuous decline from detector n° 1 to detector n° 51) was checked.

A 2 ml sample was taken from the beaker containing the talc particulate suspension using a disposable pipette and added, drop by drop, into the measurement cell until the required obscuration was obtained: for products with a $d_{50}$ (by sedigraph) greater than or equal to 10 $\mu$m, measurement with an obscuration of between 15 and 20% was used; for products with a $d_{50}$ (by sedigraph) below 10 $\mu$m, measurement an obscuration of between 5 and 12% was used. The suspension was homogenised in the cell for about 60 seconds.

The software directly traces the PSD curve expressed as a percentage of fines. The curve validity is controlled by the value of the weighted residual, the signal-to-noise ratio and the distribution of the luminous intensity of the background noise as a function of detectors. The result obtained is valid so long as the weighted residue is below 1.5% and there are no anomalies in the curve. The intensities of the measurement signal and the background noise on the detectors can be consulted using the data report tab. The intensity of the background noise must steadily decline from detector n° 1 to detector n° 51. The intensity of the measurement signal must be significantly greater than that of the background noise. The intensity of the background noise depends on how clean the cell is. The intensity of the signal depends mainly on the sample concentration (i.e. on the obscuration).

It has been found that a number of problems may arise, such as air bubbles or condensation in the measurement cell, if the pressure is too high or the water temperature is too cold. In order to avoid such problems, it is recommended to install a filtration system to improve water cleanliness and reduce its pressure, and to install a mixer tap to regulate the water temperature between 20 and 25°C before the tank is supplied. It is also recommended that the optical bench (lasers) is never switched off

*Example 7 - Method for determining BET Specific Surface Area*

The BET specific surface area was determined using a method based on the standard NF X 11-621 titled "Determination de l'aire massique (surface spécifique) des poudres par adsorption de gaz - Méthode B.E.T. - Mesure volumétrique par adsorption d'azote a basse température" (Determination of mass area (specific surface) of powders by gas adsorption - BET Methods - Volumetric measurement by nitrogen adsorption at low temperature).

The method made use of a Micromeritics measurement apparatus (available from Micromeritics Instrument Corp., USA) including a vacuum pump, a VacPrep 061 degassing section, a Tristar 3000S measurement section and sample holders, a Mettler AG204 scale with a precision of 0.1 mg, Dewar flasks, nitrogen adsorbant gas and helium carrier gas.

The sample was weighed (to 0.1 mg accuracy) near the empty sample holder and its mass $M_0$ was recorded in g. The previously homogenised powder sample was then introduced, using a funnel, into the sample holder. Sufficient space (dead volume) was left between the sample and the top of the sample holder to enable free circulation of gas. The sample holder was placed into one of the degassing stations and degassed at 250°C under a primary vacuum of 10 Pa for about 20 minutes. After degassing, a sufficient volume of nitrogen was added to the sample holder to avoid introducing air during transfer of the sample holder from the degassing station to the measurement station.

The sample holder was then attached to the measurement station and a Dewar flask containing liquid nitrogen was placed around the sample holder. The BET measurement was commenced using the device control software. The device then carried out the following operations automatically:

- Vacuum removal of the nitrogen introduced for the transfer of the sample holder;
- Leak test;
- Adding helium carrier gas;
- Measuring the dead volume at ambient temperature;
- Measuring the cold dead volume using liquid nitrogen;
- Helium vacuum removal;
- Leak test;
- Adding nitrogen at 950 mm Hg and measuring the saturation pressure; and
- Acquisition of analysis values.

The instrument's data acquisition and processing software plotted the transformed BET line from 5 measured adsorption points. The Dewar flask and then the sample holder were removed. The apparatus was allowed to return to ambient temperature and then the sample was again weighed (to an accuracy of 0.1 mg) near the sample holder and the weight was recorded as $M_2$ in g. The mass of the test portion of the sample, M, was calculated (in g) according to:

$$M = M_2 - M_0$$

The value M was then introduced into the software calculation program which automatically calculated the BET specific surface area of the sample in $m^2/g$.

**Claims**

1. A talc particulate, wherein the talc particulate has:

   a BET specific surface area of from about 2.0 $m^2/g$ to about 10.0 $m^2/g$,
   a $d_{50laser}$ of from about 10.0 $\mu$m to 15.0 $\mu$m,
   a $d_{50sedi}$ of no greater than about 7.5 $\mu$m, and

a lamellarity index of from about 1.6 to about 5.0,
wherein a ratio of the lamellarity index to the BET specific surface area is at least about 0.4 g/m$^2$.

2. The talc particulate according to claim 1, wherein the talc particulate has a BET specific surface area of from about 3.0 m$^2$/g to about 8.0 m$^2$/g, for example, from about 5.0 m$^2$/g to about 8.0 m$^2$/g, or from about 7.0 m$^2$/g to about 8.0 m$^2$/g.

3. The talc particulate according to claim 1 or claim 2, wherein the talc particulate has a d$_{50laser}$ of from about 11.0 $\mu$m to about 15.0 $\mu$m, for example, from about 11.0 $\mu$m to about 13.5 $\mu$m, or from about 11.0 $\mu$m to about 12.5 $\mu$m, or from about 11.0 $\mu$m to about 12.0 $\mu$m.

4. The talc particulate according to any one of the preceding claims, wherein the talc particulate has a d$_{50sedi}$ of from about 2.0 $\mu$m to about 7.5 $\mu$m, for example, from about 2.0 $\mu$m to about 5.5 $\mu$m, or from about 2.0 $\mu$m to about 4.0 $\mu$m, or from about 2.0 $\mu$m to about 3.0 $\mu$m, or from about 2.0 $\mu$m to about 2.5 $\mu$m.

5. The talc particulate according to any one of the preceding claims, wherein the talc particulate has a lamellarity index of from about 2.0 to about 4.0, for example, from about 3.0 to about 4.0, or from about 3.5 to about 4.0.

6. The talc particulate according to any one of the preceding claims, wherein from about 10 % by weight to about 50 % by weight, for example, from about 20 % by weight to about 50 % by weight, or from about 30 % by weight to about 48 % by weight, or from about 40 % by weight to about 48 % by weight, of the particles of the talc particulate has a particle size, by sedigraph, equal to or smaller than about 2.0 $\mu$m.

7. The talc particulate according to any one of the proceeding claims, wherein the talc particulate has a shape factor of at least about 40, for example, from about 45 to about 100, or from about 65 to about 100, or from about 80 to about 100, or from about 90 to about 100.

8. A slurry composition comprising at least about 50 % by weight, for example, at least about 55 % by weight, or at least about 60 % by weight, optionally no greater than about 70 % by weight, of a talc particulate according to any one of the preceding claims.

9. A formulation for a barrier coating, the formulation comprising from about 20 % by weight to about 65 % by weight of a talc particulate according to any one of claims 1 to 8 and from about 80 % by weight to about 35 % by weight of binder, based on the total solids content of the formulation.

10. A paper product coated with a barrier coating according to claim 9, for example, wherein the coat weight of the barrier coating is at least about 5 gsm.

11. A method for making a talc particulate, the method comprising:

    wet-grinding an aqueous suspension of a talc feed material in the presence of a dispersant;
    wherein the initial solids content of the aqueous suspension is at least about 50 % by weight, based on the total weight of the aqueous suspension, and
    wherein the wet-grinding is carried out under conditions suitable to obtain an aqueous slurry comprising a talc particulate according to any of claims 1 to 8.

12. A method according to claim 11, wherein the wet-grinding is carried out in a sand grinder, for example, a cascade of sand grinders.

13. A method according to claim 11 or 12, wherein the wet-grinding is carried out in the presence of a pH modifier, for example, to render the aqueous suspension alkaline, for example, a pH of no less than about 7.5, or no less than about 9.0.

14. Use of a talc particulate according to any one of claims 1 to 8 in a barrier coating.

15. Use of a talc particulate according to any one of claims 1 to 8 in a barrier coating:

    to improve the water resistance of a paper product coated with the barrier coating, for example, as determined in accordance with the Cobb 1800 test;
to improve the moisture resistance of a paper product coated with the barrier coating, for example, as determined in accordance with the jMVTR test; and/or
to improve the oil and grease resistance of a paper product coated with the barrier coating, for example, as determined in accordance with Kit test/Olive oil test.

Cobb 1800 Test Results
(Binder latex was EAA; coating was 19 gsm)

Fig. 1

## Cobb 1800 Test
## (Binder latex was SBR; coating was 13 gsm or 19 gsm)

Fig. 2

Fig. 3

## Kit test
## (Binder latex was EAA; coating was 13 gsm or 19 gsm)

Fig. 4

## Olive oil resistance - latex EAA (19 gsm)

Fig. 5

Europäisches
Patentamt

European
Patent Office

Office européen
des brevets

# EUROPEAN SEARCH REPORT

Application Number

EP 22 30 6346

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/263359 A1 (ZHA YONGPING [US] ET AL) 20 August 2020 (2020-08-20) * paragraph [0052]; claims 92-93 * | 1-10, 12-15 | INV.<br>D21H17/68<br>D21H19/40 |
| A | US 2017/304159 A1 (FIOLET AGNES [FR] ET AL) 26 October 2017 (2017-10-26) * claims 20-22 * | 1-15 | |
| A | EP 1 992 393 A1 (MONDO MINERALS B V [NL]) 19 November 2008 (2008-11-19) * claim 1; tables 6, 7 * | 1-15 | |

TECHNICAL FIELDS
SEARCHED      (IPC)

D21H
C01B

The present search report has been drawn up for all claims

| Place of search | Date of completion of the search | Examiner |
|---|---|---|
| The Hague | 10 March 2023 | Mattheis, Chris |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 30 6346

This annex lists the patent family members relating to the patent documents cited in the above-mentioned European search report.
The members are as contained in the European Patent Office EDP file on
The European Patent Office is in no way liable for these particulars which are merely given for the purpose of information.

10-03-2023

| Patent document cited in search report | | Publication date | Patent family member(s) | | Publication date |
|---|---|---|---|---|---|
| US 2020263359 | A1 | 20-08-2020 | AU 2019375832 | A1 | 03-06-2021 |
| | | | BR 112021007895 | A2 | 03-08-2021 |
| | | | CN 111670281 | A | 15-09-2020 |
| | | | CN 113366169 | A | 07-09-2021 |
| | | | EP 3710634 | A1 | 23-09-2020 |
| | | | EP 3847218 | A1 | 14-07-2021 |
| | | | PH 12020550571 | A1 | 26-04-2021 |
| | | | PH 12021550845 | A1 | 18-10-2021 |
| | | | US 2020263359 | A1 | 20-08-2020 |
| | | | WO 2019094805 | A1 | 16-05-2019 |
| | | | WO 2020096634 | A1 | 14-05-2020 |
| US 2017304159 | A1 | 26-10-2017 | EP 3203973 | A1 | 16-08-2017 |
| | | | JP 2017530178 | A | 12-10-2017 |
| | | | US 2017304159 | A1 | 26-10-2017 |
| | | | WO 2016055518 | A1 | 14-04-2016 |
| EP 1992393 | A1 | 19-11-2008 | AU 2008250008 | A1 | 20-11-2008 |
| | | | CN 101678246 | A | 24-03-2010 |
| | | | EP 1992393 | A1 | 19-11-2008 |
| | | | EP 2146793 | A1 | 27-01-2010 |
| | | | ES 2387003 | T3 | 11-09-2012 |
| | | | MY 149137 | A | 15-07-2013 |
| | | | US 2011097255 | A1 | 28-04-2011 |
| | | | WO 2008138963 | A1 | 20-11-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5576617 A
- WO 2013015841 A
- WO 2016007363 A1
- WO 9845374 A

### Non-patent literature cited in the description

- **G. BAUDE ; J. P. RONA.** *Ind. Min. Mines et Carr. Les techn.,* June 1990, 55-61
- **H. J. HOLLAND ; M. J. MURTAGH.** An XRD Morphology Index for Tales: The Effect of Particle Size and Morphology on the Specific Surface Area. *Advances in X-ray Analysis,* 2000, vol. 42, 421-428
- *Pulp and Paper International,* May 1994, 18
- Determination de l'aire massique (surface spécifique) des poudres par adsorption de gaz - Méthode B.E.T. - Mesure volumétrique par adsorption d'azote a basse temperature. *standard NF X 11-621*